# EUROPÄISCHE PATENTSCHRIFT

(11) **EP 3 944 604 B1**
(45) Veröffentlichungstag und Bekanntmachung des Hinweises auf die Patenterteilung: **28.08.2024**
(21) Anmeldenummer: 21186954.0
(22) Anmeldetag: 21.07.2021
(51) Int. Cl.: H04N 5/222, H04N 5/272, G06T 19/00

(54) **HINTERGRUNDWIEDERGABESYSTEM**
BACKGROUND REPRODUCTION SYSTEM
SYSTÈME DE LECTURE EN ARRIÈRE-PLAN

(30) Priorität: 24.07.2020 DE 102020119601
(43) Veröffentlichungstag der Anmeldung: 26.01.2022
(73) Patentinhaber: Arnold & Richter Cine Technik GmbH & Co. Betriebs KG, 80807 München (DE)
(72) Erfinder: Koppetz, Michael, 81669 München (DE)
(74) Vertreter: Manitz Finsterwald Patent- und Rechtsanwaltspartnerschaft mbB

(56) Entgegenhaltungen:
- CN-A- 112 311 965
- US-A1- 2005 168 485
- US-A1- 2020 145 644
- US-B1- 9 087 401

## Beschreibung

Die Erfindung betrifft ein Hintergrundwiedergabesystem für ein virtuelles Bildaufnahmestudio mit einer Hintergrund-Wiedergabeeinrichtung, welche dazu ausgebildet ist, hinter oder über einem realen Motiv eine Darstellung eines virtuellen Hintergrunds für eine Aufnahme mittels einer zugeordneten Kamera wiederzugeben.

Beispielsweise kann ein solches Hintergrundwiedergabesystem mit einer Hintergrund-Wiedergabeeinrichtung dazu vorgesehen sein, in einem Bildaufnahmestudio einen virtuellen Hintergrund bzw. eine virtuelle Umgebung zu erzeugen, vor welchem bzw. in welcher eine mittels einer Kamera aufzunehmende Szene stattfinden bzw. eine Aufnahme erfolgen kann. Bei dem Bildaufnahmestudio kann es sich um ein Filmstudio zum Aufnehmen von Bewegtbildern oder ein Fotostudio zum Aufnehmen von Einzelbildern bzw. Stillbildern handeln. Dazu kann insbesondere ein dreidimensionaler Hintergrund, beispielsweise eine Landschaft oder ein Raum, auf einer im Wesentlichen zweidimensionale Fläche wiedergegeben werden, und ein Schauspieler kann sich als ein reales Motiv vor einer solchen Hintergrund-Wiedergabeeinrichtung bewegen oder positionieren, so dass in dem Bildaufnahmestudio nahezu beliebige Räume oder Landschaften nachgestellt werden können. Ein späteres bzw. separates Hinzufügen von solchen Hintergründen, wie bei einer Aufnahme vor einem Green-Screen, ist daher nicht mehr erforderlich.

Eine weitere Anwendung, bei welcher eine dreidimensionale Umgebung auf einem zweidimensionalen Bildschirm wiedergegeben wird, ist in US 9 087 401 B1 beschrieben. Dabei soll anhand mehrerer mittels einer Kamera aufgenommener Bilder eine dreidimensionale virtuelle Umgebung geschaffen werden, wobei ein Nutzer eine zweidimensionale Wiedergabe dieser Umgebung an einem zweidimensionalen Bildschirm anfordern kann. In der zweidimensionalen Wiedergabe kann der Nutzer sodann eine zweidimensionale Fläche, beispielsweise eine Werbefläche, identifizieren und markieren, um diese Fläche in der dreidimensionalen Umgebung zu definieren. Dies ermöglicht es, bei einer Anfrage eines Endnutzers, der die dreidimensionale Umgebung an einem zweidimensionalen Bildschirm betrachten möchte, wechselnde Inhalte an der zuvor identifizierten zweidimensionalen Fläche wiederzugeben. Der Endnutzer kann zudem eine Wiedergabe der Umgebung von verschiedenen Standorten in der virtuellen Umgebung anfragen, so dass virtuelle Umgebungen wiedergegeben werden können, die auf Aufnahmen basieren, welche von unterschiedlichen Standorten oder mit unterschiedlichen Fokuseinstellungen von der Kamera erzeugt wurden.

US 2020/145644 A1 beschreibt ein Bildaufnahmestudio, bei welchem eine Szene an mehreren Displays wiedergegeben wird, wobei die Szene in Abhängigkeit von einer Position der Kamera angepasst wird. Aus US 2005/168485 A1 ist bekannt, bei einer Greenscreen- oder Bluescreen-Aufnahme in Abhängigkeit von Einstellungen eines Objektivs einer Kamera lens distortions in dem nachträglich einzufügenden Hintergrund nachzubilden.

Das Aufnehmen von Bewegtbildszenen mit Hintergrund-Wiedergabeeinrichtungen kann es Schauspielern erleichtern, auf in dem späteren Film im Hintergrund ablaufende Ereignisse oder Bewegungen zu reagieren, da solche Ereignisse mittels der Hintergrund-Wiedergabeeinrichtung dargestellt und von dem Schauspieler unmittelbar wahrgenommen werden können. Anders als beispielsweise bei einem Green-Screen, bei welchem die Umgebung für den Schauspieler nicht sichtbar ist, kann der Schauspieler die Hintergrundgeschehnisse somit miterleben und das Schauspiel daran anpassen.

Eine solche Hintergrund-Wiedergabeeinrichtung bietet somit eine Möglichkeit, einen virtuellen Hintergrund für eine aufzunehmende Szene lebendig und leicht anpassbar darzustellen und dadurch insbesondere das Schauspiel oder die Gestik zu erleichtern. Jedoch besteht im Zusammenspiel mit der zugeordneten Kamera die Problematik, dass sich an der Kamera vorgenommene Einstelllungen aufgrund der zumeist erfolgenden Darstellung eines dreidimensionalen virtuellen Hintergrunds in zwei Dimensionen anders auf die von der Kamera erzeugte Abbildung auswirken, als es bei einer Aufnahme einer tatsächlich dreidimensionalen Szene in einer dreidimensionalen Umgebung zu erwarten wäre. Insbesondere tiefenabhängige Eigenschaften eines mit der Kamera verbundenen Objektivs können dadurch in der Abbildung der Darstellung des virtuellen Hintergrunds verlorengehen, so dass die Abbildung der Darstellung des virtuellen Hintergrunds von einer Abbildung eines dem virtuellen Hintergrund entsprechenden realen Hintergrunds abweichen kann.

Durch die Wahl des Objektivs bedingte und gewünschte tiefenabhängige Effekte, insbesondere im Hinblick auf ein zu erzeugendes Bokeh in der von der Kamera erzeugten Abbildung des virtuellen Hintergrunds, können somit nicht verwirklicht werden. Das Bokeh beschreibt dabei insbesondere die Qualität von Unschärfebereichen in der von der Kamera erzeugten Abbildung, welche durch die Projektion der eintreffenden Lichtstrahlen auf eine Abbildungsebene und beispielsweise einen dort angeordneten Bildsensor mittels des verwendeten Objektivs entstehen. Beispielsweise die Form der Unschärfebereiche als Kreise oder Scheiben kann durch das Bokeh erfasst werden, wobei diese Formen bzw. deren Größe einerseits von der Entfernung des aufgenommenen Objektes zu der Kamera sowie andererseits von den Eigenschaften des verwendeten Objektivs abhängen können. Da die Unschärfebereiche den Eindruck der von der Kamera erzeugten Abbildung mitbestimmen können, kann ein für eine Aufnahme verwendetes Objektiv häufig gerade unter Berücksichtigung des von diesem Objektiv erzeugten Bokeh ausgewählt werden, wobei das gewünschte Bokeh bei einer Aufnahme der Darstellung des virtuellen Hintergrunds meist nicht erreicht werden kann.

Es ist daher eine Aufgabe der Erfindung, ein Hintergrundwiedergabesystem zu schaffen, welches das Erreichen kamera- und/oder objektivbedingter Effekte in einer mittels einer zugeordneten Kamera erzeugten Abbildung der Darstellung des virtuellen Hintergrunds ermöglicht, insbesondere solcher Effekte, die bei einer Abbildung eines dem virtuellen Hintergrund entsprechenden realen Hintergrunds erzeugt würden.

Diese Aufgabe wird gelöst durch ein Hintergrundwiedergabesystem mit den Merkmalen des Anspruchs 1. Unter anderem weist das Hintergrundwiedergabesystem eine Steuereinrichtung auf, welche dazu ausgebildet ist, die Hintergrund-Wiedergabeeinrichtung zu steuern, wobei die Steuereinrichtung einen Dateneingang zum Empfangen von Objektivdaten der zugeordneten Kamera aufweist, und wobei die Steuereinrichtung dazu ausgebildet ist, die Darstellung des virtuellen Hintergrunds in Abhängigkeit von den empfangenen Objektivdaten anzupassen.

Indem die Steuereinrichtung einen Dateneingang zum Empfangen von Objektivdaten der zugeordneten Kamera aufweist, können kamera- bzw. objektivspezifische Parameter bzw. Einstellungen der Kamera bei der Darstellung des virtuellen Hintergrunds berücksichtigt werden, um durch Anpassen der Darstellung des virtuellen Hintergrunds die mittels der Kamera erzeugte bzw. erzeugbare Abbildung dieser Darstellung zu beeinflussen. Die Kamera, die zum Aufnehmen einer Szene oder eines Bildes vorgesehen ist, kann dazu mit dem Dateneingang der Steuereinrichtung verbunden bzw. verbindbar und die Steuereinrichtung kann dazu ausgebildet sein, die Objektivdaten drahtlos und/oder kabelgebunden von der Kamera zu empfangen. Dementsprechend kann auch die Kamera zu einem drahtlosen und/oder kabelgebundenen Übermitteln der Objektivdaten ausgebildet sein.

Zur Darstellung des virtuellen Hintergrunds kann die Hintergrund-Wiedergabe-einrichtung beispielsweise ein elektronisches Display mit einer aktiven Pixelmatrix bilden und dabei insbesondere eine aktive Beleuchtungseinrichtung mit einer Vielzahl von Leuchtmitteln, insbesondere eine LED-Wand mit einer Vielzahl von Leuchtdioden oder eine OLED-Wand mit einer Vielzahl von Leuchtdioden, aufweisen, die einzeln und/oder in Gruppen benachbarter Leuchtmittel bzw. Arrays von Leuchtmitteln ansteuerbar sein können. Dadurch kann ein virtueller Hintergrund, der insbesondere eine dreidimensionale Szene wiedergeben kann, durch entsprechendes Ansteuern der Leuchtmittel an der Hintergrund-Wiedergabeeinrichtung bildlich dargestellt werden. Ferner kann die Hintergrund-Wiedergabeeinrichtung dazu ausgebildet sein, die Darstellung des virtuellen Hintergrunds durch eine Rückseitenprojektion zu erzeugen, wozu die Hintergrund-Wiedergabeeinrichtung insbesondere eine teiltransparente Leinwand und einen Projektor, insbesondere einen DLP-Projektor (Digital Light Processing), umfassen kann.

Der virtuelle Hintergrund kann durch die Hintergrund-Wiedergabeeinrichtung insbesondere als eine mathematische Projektion auf einer im Wesentlichen und/oder zumindest abschnittsweise zweidimensionalen Fläche wiedergegeben werden, wobei die Hintergrund-Wiedergabeeinrichtung zumindest abschnittsweise eben bzw. plan und/oder zumindest abschnittsweise gewölbt bzw. gekrümmt ausgebildet sein kann. Beispielsweise kann sich die Hintergrund-Wiedergabeeinrichtung bzw. ein zur Wiedergabe der Darstellung des virtuellen Hintergrunds vorgesehener Teil derselben als Hintergrund vor einem aufzunehmenden realen Motiv vertikal nach oben erstrecken und das aufzunehmende Motiv in einem oberen Abschnitt wölbend überragen, um einen möglichst vollständigen Hintergrund darstellen zu können.

Indem die Steuereinrichtung dazu ausgebildet ist, die Darstellung des virtuellen Hintergrunds in Abhängigkeit von den empfangenen Objektivdaten anzupassen, können, insbesondere aufgrund von jeweiligen Einstellungen von Objektivparametern oder sonstigen Werten, die das verwendete Kameraobjektiv charakterisieren, in einer theoretischen Abbildung eines dem virtuellen Hintergrund entsprechenden realen, insbesondere dreidimensionalen, Hintergrunds entstehende Effekte in der tatsächlich erzeugten Abbildung der Darstellung des virtuellen Hintergrunds nachgebildet werden. Dazu können die Objektivdaten insbesondere Objektiveinstellungswerte umfassen. Derartige Objektiveinstellungswerte können Werte von an dem Kameraobjektiv einstellbaren veränderlichen Parametern repräsentieren. Beispielsweise können eine Blendenöffnung, eine Brennweite und/oder ein Fokuswert die mittels der Kamera erzeugbaren Abbildungen beeinflussen, so dass Werte dieser Parameter als Objektivdaten an die Steuereinrichtung übermittelt und beim Anpassen der Darstellung berücksichtigt werden können. Ferner können die Objektivdaten eine Information über das verwendete Objektiv umfassen, welches insbesondere als Wechselobjektiv ausgebildet sein kann. Auch eine solche Information über das verwendete Objektiv, beispielsweise ein Objektivtyp und/oder eine Seriennummer, kann dazu genutzt werden, die Darstellung anzupassen, um beispielsweise objektivspezifische Effekte, insbesondere Formen von Unschärfebereichen, in der von der Kamera erzeugten Abbildung der Darstellung des virtuellen Hintergrunds nachbilden zu können. Die Objektivdaten können insofern auch als Kameraobjektivdaten bezeichnet werden.

Die Steuereinrichtung kann beispielsweise als ein Mikroprozessor, eine CPU (Central Processing Unit) oder eine GPU (Graphics Processing Unit) ausgebildet sein, welcher bzw. welche dazu ausgebildet ist, die empfangenen Objektivdaten zu verarbeiten und entsprechende Befehle zum Anpassen der Darstellung des virtuellen Hintergrunds zu generieren. Die Steuereinrichtung kann einen integrierten Speicher aufweisen oder mit einem Speicher verbunden sein, beispielsweise um Bildinformationen und Positionsinformationen des virtuellen Hintergrunds speichern und hierauf zugreifen zu können.

Ferner kann es vorgesehen sein, dass die Steuereinrichtung eine Game-Engine (auch als Spiel-Engine bezeichnet) umfasst bzw. dazu ausgebildet ist, eine Game-Engine zu nutzen, um die Darstellung des virtuellen Hintergrunds zu erzeugen. Eine Game-Engine kann dabei grundsätzlich als eine Software realisiert sein, um eine Darstellung einer Umgebung, insbesondere in einem Computerspiel, unter Berücksichtigung einer Position, insbesondere einer Position eines Spielers, zu erzeugen. Dabei kann die Game-Engine auf eine oder mehrere Datenbanken zugreifen, um die jeweilige Umgebung zu erzeugen. Entsprechend kann eine solche Game-Engine genutzt werden, um die Darstellung des virtuellen Hintergrunds unter Berücksichtigung der Position des realen Motivs, insbesondere eines Schauspielers, und/oder der Kamera zu erzeugen. Die von der Game-Engine erzeugte Darstellung kann daraufhin in Abhängigkeit von den empfangenen Objektivdaten angepasst werden, um die von der Kamera erzeugte Abbildung einer theoretischen Abbildung eines dem virtuellen Hintergrund entsprechenden realen Hintergrunds anzunähern. Eine derartige Game-Engine kann beispielsweise auf einem Mikroprozessor (insbesondere auch Mehrkern) oder einer Graphikkarte laufen.

Beispielsweise kann die Steuereinrichtung dazu ausgebildet sein, in Abhängigkeit von den empfangen Objektivdaten und insbesondere einer empfangenen Information über das verwendete Objektiv bzw. einem Objektivtyp einen dem Objektiv zugeordneten digitalen Filter aus einer Datenbank auszuwählen und anzuwenden, um die Darstellung des virtuellen Hintergrunds anzupassen. Ferner können empfangene Objektiveinstellungswerte, beispielsweise eine Brennweite oder eine Fokusentfernung, als Parameter in einen solchen digitalen Filter eingesetzt werden, um die Einstellung des jeweiligen Objektivs bei der Darstellung des virtuellen Hintergrunds zu berücksichtigen. Das Anwenden digitaler Filter zum Anpassen der Darstellung des virtuellen Hintergrunds kann dabei beispielsweise ebenfalls mittels einer Game-Engine erfolgen, sofern eine solche zum Erzeugen der Darstellung des virtuellen Hintergrunds vorgesehen ist. Es ist jedoch auch möglich, dass eine vorgesehen Game-Engine lediglich zum Erzeugen der Darstellung ohne Berücksichtigung von Objektivdaten vorgesehen ist, während die Anpassung der Darstellung durch weitere Software-Module erfolgt, die keinen Teil der Game-Engine bilden. Zudem kann die Darstellung auch anderweitig, beispielsweise mittels in einer Datenbank und/oder einem Speicher gespeicherter Modelle, erzeugt werden, ohne dass die Steuereinrichtung eine Game-Engine umfasst.

Einstellungen von Parametern eines Objektivs der zugeordneten Kamera bzw. der Kamera können dabei beispielsweise die Schärfe eines Punktes oder Objekts in einer mittels der Kamera erzeugten Abbildung beeinflussen. Die Schärfe, mit welcher ein jeweiliger Punkt oder ein jeweiliges Objekt in der Abbildung erscheint, kann von dem Abstand des betreffenden Objekts von der Kamera bzw. deren Objektiv abhängen, so dass Objekte, die in einem dem virtuellen Hintergrund entsprechenden realen Hintergrund beabstandet zueinander bzw. unterschiedlich beabstandet zu der Kamera angeordnet sind, in einer theoretischen Abbildung dieses realen Hintergrunds mit einer unterschiedlichen Schärfe dargestellt würden. Da diese Objekte jedoch mittels der Hintergrund-Wiedergabeeinrichtung in einer Ebene oder zumindest mit einem sich von dem Abstand des Objekts in dem realen Hintergrund unterscheidenden Abstand zu der Kamera dargestellt werden können, werden die Objekte in der von der Kamera erzeugten Abbildung der Darstellung des virtuellen Hintergrunds meist mit einer im Wesentlichen gleichen Schärfe abgebildet, die durch den Abstand der Hintergrund-Wiedergabeeinrichtung zu der Kamera bestimmt ist. Das Empfangen von Objektivdaten, insbesondere von Objektiveinstellungswerten, ermöglicht es, beispielsweise eine Schärfe der Objekte bereits in der Darstellung des virtuellen Hintergrunds anzupassen, um in der Abbildung der Darstellung des virtuellen Hintergrunds letztlich dieselbe oder eine ähnliche Unschärfe wie bei einer Abbildung des realen Hintergrunds erreichen zu können. Durch Anpassen der Darstellung für sämtliche Bereiche der Hintergrund-Wiedergabeeinrichtung kann insbesondere auch ein der theoretischen Abbildung vergleichbarer Verlauf der Schärfe und ein vergleichbares Bokeh erzeugt werden.

Die Anpassung der Darstellung kann somit gewissermaßen dazu dienen, sich auf die Abbildung der Darstellung des virtuellen Hintergrunds mittels der zugeordneten Kamera auswirkende Effekte, die von den Objektivdaten und insbesondere Objektiveinstellungswerten abhängen, zu beeinflussen und insbesondere zu verstärken. Aufgrund des Abweichens der geometrischen Verhältnisse der Darstellung des virtuellen Hintergrunds von den Verhältnissen bei einem dem virtuellen Hintergrund entsprechenden realen Hintergrund ausbleibende Effekte oder Abschwächungen solcher Effekte können dadurch kompensiert werden. So kann insbesondere das bewusste unscharfe Darstellen eines Objektes oder Punktes in der Darstellung des virtuellen Hintergrunds dazu führen, eine durch die Einstellung des Objektivs bedingte Schärfe bzw. Unschärfe dieses Objekts oder Punktes in der von der Kamera erzeugten Abbildung derart zu verstärken, dass die Unschärfe einer Unschärfe in einer theoretischen Abbildung eines dem virtuellen Hintergrund entsprechenden realen Hintergrund entspricht oder angenähert ist.

Zur Anpassung der Darstellung des virtuellen Hintergrunds ist es dabei nicht zwingend erforderlich, dass bereits vor dem Empfangen von Objektivdaten bzw. vor dem Anpassen der Darstellung eine vollständige Darstellung des virtuellen Hintergrunds von der Hintergrund-Wiedergabeeinrichtung erzeugt wurde. Vielmehr kann das Anpassen der Darstellung in Abhängigkeit von den empfangenen Objektivdaten beispielsweise auch zu Beginn einer Szene bzw. vor einer Aufnahme beim Generieren der Darstellung erfolgen, wobei die Objektivdaten empfangen und die Darstellung in Abhängigkeit davon erzeugt werden kann. Das Anpassen der Darstellung kann somit grundsätzlich auch als integraler Prozess während des Erzeugens der Darstellung mittels der Hintergrund-Wiedergabeeinrichtung erfolgen bzw. derart verstanden werden. Zum Erzeugen und Anpassen der Darstellung kann die Steuereinrichtung beispielsweise auf ein Modell, insbesondere ein dreidimensionales Modell, zurückgreifen, welches in einem nichtflüchtigen Speicher, beispielsweise einem Halbleiterspeicher, gespeichert und bereitgestellt sein kann. Insbesondere kann die Steuereinrichtung dabei in Abhängigkeit von einer empfangenen Information über das verwendete Objektiv auf ein jeweiliges Modell zurückgreifen. Alternativ oder zusätzlich kann die Steuereinrichtung zum Erzeugen der Darstellung auf eine Game-Engine zurückgreifen.

Objektivdaten können in Echtzeit, beispielsweise während der Aufnahme einer Filmszene, an die Steuereinrichtung übermittelt bzw. von der Steuereinrichtung empfangen werden, so dass die Darstellung beispielsweise in Echtzeit an sich verändernde Einstellungen des Objektivs bzw. der Kamera angepasst werden kann. Beispielsweise kann die Darstellung des virtuellen Hintergrunds während einer Fokussierung auf ein sich vor der Hintergrund-Wiedergabeeinrichtung befindendes reales Motiv, beispielsweise ein Gesicht eines Schauspielers, kontinuierlich angepasst werden, um ein der Erwartung bei einer Aufnahme eines dem virtuellen Hintergrund entsprechenden realen Hintergrunds möglichst angenähertes Bokeh in der von der Kamera erzeugten Abbildung der Darstellung des virtuellen Hintergrunds erhalten zu können.

Ferner kann es auch vorgesehen sein, dass Positionen und/oder Ausrichtungen, beispielsweise Neigungen oder Winkel, des Objektivs bzw. der Kamera an die Steuereinrichtung übermittelt werden und die Steuereinrichtung die Darstellung des virtuellen Hintergrunds in Abhängigkeit von solchen Positionsdaten anpasst. Auch Bewegungen der Kamera können sich unterschiedlich auf die erzeugte Abbildung der Darstellung des virtuellen Hintergrunds und eine theoretische Abbildung bei einer Aufnahme eines dem virtuellen Hintergrund entsprechenden realen Hintergrunds auswirken, wobei die Steuereinrichtung beispielsweise dazu ausgebildet sein kann, Objekte des virtuellen Hintergrunds in Abhängigkeit von den empfangenen Positionsdaten zu verschieben, um deren Positionen in der erzeugten Abbildung den erwarteten Positionen in der theoretischen Abbildung anzunähern.

Wie bereits erläutert, kann die Hintergrund-Wiedergabeeinrichtung insbesondere dazu vorgesehen sein, einen virtuellen Hintergrund für eine Aufnahme einer Filmszene, die in dem virtuellen Bildaufnahmestudio gedreht wird bzw. werden soll, bereitzustellen. Es ist jedoch auch möglich, mittels der Hintergrund-Wiedergabeeinrichtung einen virtuellen Hintergrund für eine Fotoaufnahme, beispielsweise in der Modefotografie, zu erzeugen, wobei die Darstellung des virtuellen Hintergrunds für das aufzunehmende Foto bzw. Stillbild in Abhängigkeit von den empfangenen Objektivdaten angepasst werden kann. Dies kann es ermöglichen, ein gerade in der Fotografie angestrebtes und durch die Wahl des Objektivs bedingtes realistisches Bokeh in der von der Kamera erzeugten Abbildung der Darstellung des virtuellen Hintergrunds zu erreichen.

Weitere Ausführungsformen der Erfindung sind den abhängigen Ansprüchen, der Beschreibung sowie den Zeichnungen zu entnehmen.

Bei einigen Ausführungsformen kann die Hintergrund-Wiedergabeeinrichtung eine flächige aktive Beleuchtungseinrichtung aufweisen. Insbesondere kann die Hintergrund-Wiedergabeeinrichtung dabei eine aktive zweidimensionale Beleuchtungseinrichtung aufweisen, insbesondere eine aktive Pixelmatrix. Die Beleuchtungseinrichtung kann eine Vielzahl von Leuchtmitteln aufweisen, die einzelnen und/oder in jeweiligen Gruppen von der Steuereinrichtung ansteuerbar sein können, um ein Bild bzw. eine Darstellung erzeugen und einen virtuellen Hintergrund für eine aufzunehmende Szene wiedergeben zu können. Die Leuchtmittel können dabei insbesondere bezüglich der Farbe und/oder Helligkeit des erzeugten Lichts einstellbar sein, so dass durch Ansteuern der Leuchtmittel die Darstellung des virtuellen Hintergrunds aktiv erzeugt bzw. angepasst werden kann. Dabei kann die Gesamtheit der Leuchtmittel eine auf der insbesondere zweidimensionalen Fläche der aktiven Beleuchtungseinrichtung wiedergegebene Darstellung des insbesondere dreidimensionalen virtuellen Hintergrunds anzeigen. Auch Bewegungen in dem virtuellen Hintergrund können durch Anpassen der Darstellung bzw. entsprechendes Ansteuern der Beleuchtungseinrichtung wiedergegeben werden. Alternativ zu einer aktiven Beleuchtungseinrichtung mit einer Vielzahl von Leuchtmitteln kann es auch vorgesehen sein, dass die Hintergrund-Wiedergabeeinrichtung zum Erzeugen der Darstellung des virtuellen Hintergrunds mittels einer Rückseitenprojektion ausgebildet ist.

Die Hintergrund-Wiedergabeeinrichtung kann bei einigen Ausführungsformen dazu ausgebildet sein, das reale Motiv zu beleuchten. Insbesondere kann die Hintergrund-Wiedergabeeinrichtung somit, zusätzlich zu dem Erzeugen der Darstellung des virtuellen Hintergrunds, dazu ausgebildet sein, das reale Motiv, beispielsweise einen Schauspieler, auszuleuchten und dabei ergänzend zu einer sonstigen Beleuchtung des virtuellen Bildaufnahmestudios wirken. Insbesondere kann sich die Hintergrund-Wiedergabeeinrichtung dabei hinter oder über dem realen Motiv erstrecken, so dass die Hintergrund-Wiedergabeeinrichtung dazu ausgebildet sein kann, das reale Motiv von der Seite und/oder von oben zu beleuchten.

Eine solche Beleuchtung des realen Motivs mittels der Hintergrund-Wiedergabe-einrichtung ermöglicht es beispielsweise, durch Lichtquellen in einem dem virtuellen Hintergrund entsprechenden realen Hintergrund erzeugte Effekte, insbesondere in Wechselwirkung mit dem realen Motiv, detailgetreu zu erzeugen und aufzunehmen. Beispielsweise können in dem virtuellen Hintergrund vorhandene Lichtquellen, wie zum Beispiel Laternen oder Scheinwerfer eines vorbeifahrenden Autos bei einer aufzunehmenden Straßenszene, einen Schauspieler direkt beleuchten, so dass der von dem Schauspieler geworfene Schatten dem Schatten entspricht, den der Schauspieler bei einer Beleuchtung durch eine reale Laterne oder einen realen Scheinwerfer werfen würde.

Bei einigen Ausführungsformen kann die Hintergrund-Wiedergabeeinrichtung eine LED-Wand aufweisen, die eine Vielzahl von individuell ansteuerbaren Leuchtdioden (LED) in einer flächigen Anordnung aufweist. Insbesondere kann die Hintergrund-Wiedergabeeinrichtung als eine LED-Wand mit einer Vielzahl von Leuchtdioden ausgebildet sein, wobei die Leuchtdioden einzeln oder in Gruppen ansteuerbar sein können, um eine Darstellung eines virtuellen Hintergrunds in einer Fläche zu erzeugen. Durch Ansteuern dieser Leuchtdioden kann die Darstellung mittels der Steuereinrichtung angepasst werden, um den virtuellen Hintergrund verändern und/oder eine mittels der Kamera erzeugte bzw. erzeugbare Abbildung der Darstellung des virtuellen Hintergrunds beeinflussen zu können. Ferner kann die Hintergrund-Wiedergabeeinrichtung eine OLED-Wand mit einer Vielzahl organischer Leuchtdioden (OLED) aufweisen und/oder als eine OLED-Wand ausgebildet sein.

Es kann bei einigen Ausführungsformen vorgesehen sein, dass sich die Hintergrund-Wiedergabeeinrichtung in einer vertikalen und/oder horizontalen Ausrichtung erstreckt. Insbesondere kann sich die Hintergrund-Wiedergabeeinrichtung dabei plan in einer vertikalen und/oder horizontalen Fläche oder gewölbt erstrecken. Beispielsweise kann die Hintergrund-Wiedergabeeinrichtung eine Beleuchtungseinrichtung, insbesondere eine LED-Wand, umfassen, die sich ein reales Motiv umgebend in der Vertikalen erstrecken kann, um den virtuellen Hintergrund derart darzustellen, dass der virtuelle Hintergrund auch bei einem Schwenken der Kamera aufgenommen wird. Ebenso ist es möglich, dass sich die Hintergrund-Wiedergabeeinrichtung in einer vertikalen Ebene erstreckt, um den virtuellen Hintergrund in dieser Ebene und insbesondere hinter dem realen Motiv arzustellen. Ferner kann sich die Beleuchtungseinrichtung bzw. die LED-Wand beispielsweise in einer horizontalen Ebene über dem realen Motiv erstrecken, um den virtuellen Hintergrund und/oder die Beleuchtung des Motivs in dieser Ebene bzw. oberhalb des Motivs auszugestalten bzw. zu vervollständigen. Dabei kann ein gewölbter bzw. gekrümmter Übergang zwischen einem vertikalen und einem horizontalen Abschnitt der Hintergrund-Wiedergabeeinrichtung vorgesehen sein. Ferner kann es vorgesehen sein, dass sich die Hintergrund-Wiedergabeeinrichtung zumindest abschnittsweise schräg nach oben über dem realen Motiv erstreckt.

Bei einigen Ausführungsformen kann die Steuereinrichtung dazu ausgebildet sein, die Darstellung des virtuellen Hintergrunds derart anzupassen, dass sich eine mittels der Kamera bei den empfangenen Objektivdaten erzeugte Abbildung der Darstellung einer theoretischen Abbildung annähert, die bei Abbilden eines dem virtuellen Hintergrund entsprechenden realen Hintergrunds mittels der zugeordneten Kamera entstehen würde.

Insbesondere kann mittels der Hintergrund-Wiedergabeeinrichtung ein virtueller Hintergrund dargestellt werden, der eine dreidimensionale Umgebung für die aufzunehmende Szene wiedergibt. Dabei kann es sich beispielsweise um eine Nachahmung einer real existierenden Landschaft oder eines real existierenden Raumes handeln oder es können fiktive Umgebungen geschaffen werden. Ein in der - gegebenenfalls fiktiven - Realität dreidimensionaler realer Hintergrund kann dabei jedoch zumeist durch die Hintergrund-Wiedergabeeinrichtung in einer Projektion, insbesondere auf zwei Dimensionen, wiedergegeben werden, so dass in der Realität voneinander entfernte bzw. beanstandete Objekte oder Bereiche des virtuellen Hintergrunds in einer Ebene bzw. zumindest mit einem von der Realität abweichenden Abstand voneinander dargestellt werden. Dementsprechend werden auch sämtliche Objekte des virtuellen Hintergrunds mit einem im Wesentlichen gleichen bzw. zumindest nicht dem realen Abstand entsprechenden Abstand zu der Kamera von der Kamera aufgenommen.

Die Darstellung des virtuellen Hintergrunds, eines in der Realität insbesondere dreidimensionalen Hintergrunds, mittels der Hintergrund-Wiedergabeeinrichtung kann somit dazu führen, dass tiefenabhängige Eigenschaften des Objektivs in einer Abbildung mittels der Kamera verlorengehen. Beispielsweise kann die Schärfe verschiedener Bereiche des realen Hintergrunds in einer theoretischen Abbildung, welche die Kamera bei einer Aufnahme des realen Hintergrunds aufgrund dessen Dreidimensionalität erzeugen würde, von dem Abstand dieser Bereiche zu der Kamera abhängen und sich insbesondere in Abhängigkeit von den Objektivdaten bzw. von Objektiveinstellungswerten, beispielsweise einer Blendenöffnung, verändern. Um solche Effekte auch bei einer Aufnahme einer Szene vor der Darstellung des virtuellen Hintergrunds in der mittels der Kamera erzeugten bzw. erzeugbaren Abbildung erreichen zu können, kann die Darstellung angepasst werden, um beispielsweise bereits durch eine unscharfe Darstellung eines Bereichs dessen Unschärfe in der von der Kamera erzeugten Abbildung zu erhöhen. Insbesondere kann eine solche Unschärfe durch Zusammenfassen mehrerer Leuchtmittel einer aktiven Beleuchtungseinrichtung, insbesondere mehrerer Leuchtdioden, zu einem Bereich mit gleicher und/oder ähnlicher Farbe und/oder Helligkeit erzeugt werden.

Beispielsweise kann die Steuereinrichtung dazu ausgebildet sein, in Abhängigkeit von den empfangenen Objektivdaten eine theoretische Abbildung, eine Abbildung eines dem virtuellen Hintergrund entsprechenden realen Hintergrunds, zu berechnen, um die mittels der Kamera bei diesen Objektivdaten erzeugbare Abbildung mit der theoretischen Abbildung vergleichen zu können. Dazu kann die Steuereinrichtung beispielsweise auf ein Modell des virtuellen Hintergrunds zurückgreifen, welches insbesondere Positionsdaten für eine Vielzahl von (virtuellen) Hintergrundbereichen umfassen kann, aus welchen die Abstände dieser Hintergrundbereiche des virtuellen Hintergrunds zu der (realen) Hintergrund-Wiedergabeeinrichtung, auf welcher der virtuelle Hintergrund wiedergegeben wird, und/oder der Kamera hervorgehen. Diese Positionsdaten können insbesondere auch eine Krümmung der (realen) Hintergrund-Wiedergabeeinrichtung im Raum berücksichtigen. Die Steuereinrichtung kann auch dazu ausgebildet sein, die tatsächlich erzeugbare Abbildung der Darstellung des virtuellen Hintergrunds in Abhängigkeit von den Objektivdaten zu berechnen, um diese Abbildung beispielsweise durch Bildanalyseverfahren mit der theoretischen Abbildung vergleichen und die Darstellung des virtuellen Hintergrunds derart anpassen zu können, dass die Abbildung der theoretischen Abbildung angenähert wird.

Ferner kann es vorgesehen sein, dass die Steuereinrichtung auf einen Speicher zugreifen kann (lokal oder Cloud), in welchem mehrere Modelle zum Erzeugen der Darstellung des virtuellen Hintergrunds in Abhängigkeit von den empfangenen Objektivdaten abgespeichert sind. Diese können beispielsweise zuvor durch Simulationen oder, insbesondere bei einem Nachbilden tatsächlicher Landschaften, versuchsweise Aufnahmen der Landschaft bei verschiedenen Objektiveinstellungswerten, welche als Objektivdaten von der Steuereinrichtung empfangen werden können, gewonnen sein. Die Steuereinrichtung kann dabei dazu ausgebildet sein, in Abhängigkeit von den empfangenen Objektivdaten, insbesondere Objektiveinstellungswerten, das jeweilige entsprechende Modell zum Erzeugen der Darstellung des virtuellen Hintergrunds zu verwenden und die Darstellung durch einen Wechsel des verwendeten Modells anzupassen.

Ferner können auch jeweilige Modelle für bestimmte Objektivtypen und/oder jeweilige Objektive in dem Speicher gespeichert sein, so dass die Steuereinrichtung nach dem Empfangen einer Information über das verwendete Objektiv bzw. eine solche Information umfassender Objektivdaten ein jeweiliges zugeordnetes Modell zum Erzeugen der Darstellung verwenden kann. Beispielsweise können die empfangenen Objektivdaten dazu einen Objektivtyp und/oder eine Seriennummer oder eine sonstige Kennzeichnung des Objektivs umfassen. Insbesondere kann dadurch eine Form von Unschärfebereichen in einer Abbildung eines dem virtuellen Hintergrund entsprechenden realen Hintergrunds, die von dem verwendeten Objektiv abhängen kann, in der von der Kamera tatsächlich erzeugten Abbildung der Darstellung des virtuellen Hintergrunds nachgebildet werden. Zusätzlich zu einer solchen Information über das verwendete Objektiv können die Objektivdaten auch jeweilige Objektiveinstellungswerte umfassen, so dass eine dem jeweiligen Objektiv zugeordnete und an die Einstellungen dieses Objektivs angepasste Darstellung erzeugt werden kann.

Bei einigen Ausführungsformen können die Objektivdaten Parameter repräsentieren, die in einem Objektiv der zugeordneten Kamera eingestellt sind.

Die Objektivdaten können eingestellte Werte (Objektiveinstellungswerte) wenigstens eines der folgenden Objektivparameter der zugeordneten Kamera repräsentieren: eine Blendenöffnung, eine Fokusentfernung und/oder eine Brennweite eines Objektivs der zugeordneten Kamera. Die Blendenöffnung kann sich dabei insbesondere auf eine Öffnungsweite einer Irisblende des Objektivs beziehen. Insbesondere können sich Einstellungen dieser Parameter in Abhängigkeit von dem Abstand zwischen einem Objekt und der Kamera auf die Schärfe auswirken, mit welcher das Objekt in der von der Kamera erzeugten Abbildung abgebildet wird, so dass die Darstellung des virtuellen Hintergrunds unter Berücksichtigung der Werte eines oder mehrerer dieser Parameter angepasst werden kann, um ein möglichst realistisches Bokeh erhalten zu können.

Bei einigen Ausführungsformen kann es vorgesehen sein, dass die Steuereinrichtung dazu ausgebildet ist, an dem Dateneingang Positionsdaten der zugeordneten Kamera zu empfangen und die Darstellung des virtuellen Hintergrunds in Abhängigkeit von den empfangenen Positionsdaten anzupassen. Beispielsweise können solche Positionsdaten Abstände oder Neigungen bzw. Winkel der Kamera bzw. des Objektivs relativ zu der Hintergrund-Wiedergabeeinrichtung umfassen. Um derartige Positionsdaten gewinnen zu können, kann das Hintergrundwiedergabesystem beispielsweise eine Positionsbestimmungseinrichtung mit Hilfskameras umfassen, welche die Position der für die Aufnahme der Szene bestimmten Kamera relativ zu der Hintergrund-Wiedergabeeinrichtung optisch erfassen und an die Steuereinrichtung übermitteln kann.

Auch durch das Berücksichtigen solcher Positionsdaten oder Ausrichtungen der Kamera bei dem Anpassen der Darstellung kann eine mittels der Kamera erzeugbare Abbildung der Darstellung des virtuellen Hintergrunds einer theoretischen Abbildung angenähert werden, die bei einer Aufnahme eines dem virtuellen Hintergrund entsprechenden realen Hintergrunds entstehen würde. Beispielsweise können sich bei einem Schwenken der Kamera Winkel zu mittels der Hintergrund-Wiedergabeeinrichtung dargestellten Objekten anders verändern, als dies bei den Objekten in einem realen Hintergrund der Fall wäre, in welchem die Objekte verschiedene Abstände zu der Kamera aufweisen. Die Steuereinrichtung kann beispielsweise dazu ausgebildet sein, solche Abweichungen der Darstellung des virtuellen Hintergrunds zu ermitteln und die Objekte auf der Hintergrund-Wiedergabeeinrichtung derart zu verschieben, dass die Objekte in der mittels der Kamera erzeugten Abbildung mit einem dem Winkel in der theoretischen Abbildung entsprechenden Winkel bzw. Abstand zu benachbarten Objekten abgebildet werden.

Bei einigen Ausführungsformen können die Objektivdaten eine Information über ein verwendetes Objektiv der zugeordneten Kamera umfassen, wobei die Steuereinrichtung dazu ausgebildet sein kann, die Darstellung des virtuellen Hintergrunds in Abhängigkeit von der empfangenen Information über das verwendete Objektiv anzupassen. Insbesondere kann das Objektiv dabei als Wechselobjektiv ausgebildet sein, so dass ein jeweiliges optimal an die durchzuführende Aufnahme angepasstes Wechselobjektiv mit der Kamera verbunden werden kann. In Abhängigkeit von dem verwendeten Objektiv können dabei objektivspezifische Effekte entstehen, die sich unterschiedlich auf die von der Kamera erzeugte Abbildung der Darstellung des virtuellen Hintergrund und auf eine theoretische Abbildung, welche bei einem Abbilden eines dem virtuellen Hintergrund entsprechenden realen Hintergrunds von der Kamera erzeugt würde, auswirken können. Grundsätzlich können jedoch auch Kameras mit jeweiligen fest zugeordneten Objektiven vorgesehen sein, so dass durch das Übermitteln der Information das der jeweiligen Kamera zugeordnete Objektiv erfasst und bei der Anpassung der Darstellung des virtuellen Hintergrunds berücksichtigt werden kann.

Eine solche Information über ein verwendetes Objektiv kann insbesondere den Objektivtyp bzw. ein Modell umfassen. Die Darstellung des virtuellen Hintergrunds kann dabei derart angepasst werden, dass durch den Objekttyp bedingte optische Effekte, die bei einer theoretischen Abbildung des realen Hintergrunds entstehen würden, in der mittels der Kamera erzeugten Abbildung der Darstellung des virtuellen Hintergrunds nachgeahmt werden. Insbesondere können optische Aberrationen, insbesondere abstandsabhängige optische Aberrationen, des Objektivs durch Anpassen der Darstellung des virtuellen Hintergrunds derart verstärkt oder beeinflusst werden, dass sich diese optischen Aberrationen in einer Abbildung der Darstellung des virtuellen Hintergrunds in gleicher bzw. annähernd gleicher Weise niederschlagen wie in einer Abbildung eines dem virtuellen Hintergrund entsprechenden realen Hintergrunds. Insbesondere kann die Steuereinrichtung dazu auf digitale Filter zurückgreifen, die mit dem verwendeten Objektiv korrelieren, um die erforderliche Anpassung der Darstellung des virtuellen Hintergrunds zu ermitteln. Beispielsweise kann die Steuereinrichtung dazu ausgebildet sein, solche digitale Filter bei einer Berechnung der theoretischen und/oder der tatsächlich erzeugten Abbildung zu verwenden, um eine erforderliche Anpassung der Darstellung des virtuellen Hintergrunds ermitteln zu können.

Die Information kann bei einigen Ausführungsformen einen Objektivtyp, eine Kennzeichnung des Objektivs, eine Form einer Irisblende des Objektivs (z.B. Anzahl der Flügel bzw. Lamellen), eine Anordnung zylindrischer Elemente des Objektivs (insbesondere bei einem anamorphotischen Objektiv) und/oder eine Beschichtung eines optischen Elements des Objektivs repräsentieren. Insbesondere kann eine Kennzeichnung des Objektivs dabei eine Seriennummer umfassen, um ein eindeutiges Bestimmen des verwendeten Objektivs zu ermöglichen. Dabei kann vorgesehen sein, dass anhand der Seriennummer die relevanten Daten aus einer gespeicherten Datenbank (lokal oder Cloud) ausgelesen werden. Grundsätzlich können jedoch auch lediglich Eigenschaften des Objektivs wie die Form einer Irisblende oder die Anordnung optischer Elemente des Objektivs dazu verwendet werden, die Darstellung des virtuellen Hintergrunds anzupassen, ohne dass der Objektivtyp unmittelbar berücksichtigt wird.

Die Steuereinrichtung ist ferner dazu ausgebildet, die Darstellung des virtuellen Hintergrunds derart anzupassen, dass abstandsabhängige Abbildungseffekte, die bei einer theoretischen Abbildung eines dem virtuellen Hintergrund entsprechenden realen Hintergrunds mittels der zugeordneten Kamera gemäß den empfangenen Objektivdaten entstehen würden, in der von der Kamera erzeugbaren Abbildung der Darstellung des virtuellen Hintergrunds nachgebildet sind.

Insbesondere kann die Schärfe, mit der Objekte in der mittels der zugeordneten Kamera erzeugbaren Abbildung abgebildet werden, abstandsabhängig sein und von den Objektivdaten bzw. Objektiveinstellungswerten, beispielsweise einer Blendenöffnung, abhängen. Beispielsweise können in der Realität weit entfernte Objekte bei weiter Blendenöffnung unscharf abgebildet werden, während nähere Objekte scharf abgebildet werden können. Durch Verkleinern der Blendenöffnung können hingegen zunehmend auch weiter entfernte Objekte scharf dargestellt werden.

Aufgrund dieser Abhängigkeit der Schärfe eines Objekts in der Abbildung von einem Abstand des Objekts zu der Kamera können sich in einer mittels der Kamera erzeugbaren Abbildung der Darstellung des virtuellen Hintergrunds Unterschiede im Vergleich zu einer theoretischen Abbildung ergeben, die bei einer Aufnahme bzw. einem Abbilden des realen Hintergrunds entstehen würde. Um diesen abstandsabhängigen Abbildungseffekt in der von der Kamera erzeugbaren Abbildung nachzubilden, kann ein in dem realen Hintergrund weit entfernter Punkt in der Darstellung des virtuellen Hintergrunds in Abhängigkeit von den empfangenen Objektivdaten unscharf dargestellt werden, um diesen Punkt in der von der Kamera erzeugten Abbildung der Darstellung des virtuellen Hintergrunds mit einer der Unschärfe in einer theoretischen Abbildung des realen Hintergrunds entsprechenden oder angenäherten Unschärfe wiedergeben zu können. Ebenso können beispielsweise Helligkeitswerte einzelner Punkte oder Bereiche der Darstellung des virtuellen Hintergrunds in Abhängigkeit von den empfangenen Objektivdaten angepasst werden, um eine abstandsabhängige Veränderung der Helligkeit in einer mittels der Kamera erzeugbaren theoretischen Abbildung des realen Hintergrunds, beispielsweise bei einem Verändern einer Blendenöffnung, in der von der Kamera erzeugten Abbildung der Darstellung des virtuellen Hintergrunds nachzubilden.

Der virtuelle Hintergrund kann bei einigen Ausführungsformen eine dreidimensionale Szene repräsentieren und die Steuereinrichtung kann dazu ausgebildet sein, verschiedene Bereiche der dreidimensionalen Szene in Abhängigkeit von den empfangenen Objektivdaten in unterschiedlicher Schärfe darzustellen. Indem verschiedene Bereiche der dreidimensionalen Szene in unterschiedlicher Schärfe dargestellt werden können, kann insbesondere ein Unschärfeverlauf in der Abbildung der Darstellung des virtuellen Hintergrunds mittels der Kamera erreicht werden, der einem Unschärfeverlauf in einer theoretischen Abbildung eines dem virtuellen Hintergrund entsprechenden realen Hintergrunds entspricht bzw. angenähert ist. Dazu kann beispielsweise ein Modell des virtuellen Hintergrunds abschnittsweise in unterschiedlicher Schärfe mittels der Hintergrund-Wiedergabeeinrichtung dargestellt bzw. gerendert werden. Verschiedene Bereiche der dreidimensionalen Szene können dabei beispielsweise in verschiedene Abstandsbereiche in Bezug auf die Kamera bzw. die Hintergrund-Wiedergabeeinrichtung bzw. in verschiedene Schärfebereiche eingeteilt sein, wobei den Abstandsbereichen bzw. Schärfebereichen für verschiedene Objektivdaten verschiedene Schärfen bzw. Unschärfen zugeordnet sein können, mit welcher der virtuelle Hintergrund in der Darstellung mittels der Hintergrund-Wiedergabeeinrichtung wiederzugeben ist. Dadurch kann beispielsweise ein abstandsabhängiger Unschärfeverlauf bzw. ein Bokeh in der mittels der Kamera erzeugten Abbildung einem Unschärfeverlauf in einer theoretischen Abbildung, die bei Abbilden des realen Hintergrunds bzw. der realen dreidimensionalen Szene von der Kamera erzeugt werden würde, angenähert werden.

Die Steuereinrichtung kann bei einigen Ausführungsformen, wie bereits erwähnt, mit einem Speicher verbunden sein, in welchem der virtuelle Hintergrund als ein Modell gespeichert ist, wobei die Steuereinrichtung dazu ausgebildet sein kann, die Darstellung des virtuellen Hintergrunds anhand des gespeicherten Modells zu erzeugen. Beispielsweise kann in dem Speicher, insbesondere einem Halbleiterspeicher, ein Modell des Hintergrunds gespeichert sein, gemäß welchem sämtliche Objekte des virtuellen Hintergrunds von der Hintergrund-Wiedergabeeinrichtung scharf dargestellt werden und die Steuereinrichtung kann dazu ausgebildet sein, dieses Modell in Abhängigkeit von den empfangenen Objektivdaten anzupassen, um beispielsweise eine sich verändernde Blendenöffnung berücksichtigen und Objekte bei einem Öffnen der Blende unschärfer darstellen zu können. Ferner kann der Speicher beispielsweise verschiedene Modelle des virtuellen Hintergrunds bereitstellen, die jeweiligen Objektivdaten, beispielsweise einem jeweiligen Objektivtyp oder jeweiligen Objektiveinstellungswerten des Objektivs, zugeordnet sein können, so dass die Steuereinrichtung in Abhängigkeit von den empfangenen Objektivdaten auf ein jeweiliges Modell zugreifen und das Modell mittels der Hintergrund-Wiedergabeeinrichtung darstellen kann. Beispielsweise können für verschiedene Blendenöffnungen, Brennweiten und/oder Fokusentfernungen bzw. Kombinationen dieser Parameter jeweilige Modelle gespeichert sein.

Generell muss der genannte Speicher nicht lokal an der Steuereinrichtung angeordnet sein. Es kann sich auch um einen über ein Datennetz (drahtgebunden oder drahtlos) zugänglichen Speicher handeln (z.B. Datenbank in Cloud-Speicher).

Das gespeicherte Modell des virtuellen Hintergrunds kann für eine Vielzahl von Hintergrundbereichen eine jeweilige Bildinformation und eine jeweilige Positionsinformation umfassen. Die Bildinformation kann dabei beispielsweise Farb- und/oder Helligkeitsangaben eines jeweiligen Hintergrundbereichs umfassen, während die Positionsinformation beispielsweise Abstände der Hintergrundbereiche zu der Hintergrund-Wiedergabeeinrichtung und/oder dreidimensionale Koordinaten des jeweiligen Hintergrundbereichs, insbesondere in Bezug auf einen in dem Bildaufnahmestudio bzw. zu der Hintergrund-Wiedergabeeinrichtung definierten Ursprung, umfassen kann. Dabei kann ein Hintergrundbereich beispielsweise von einem einzelnen Leuchtmittel einer Beleuchtungseinrichtung der Hintergrund-Wiedergabeeinrichtung bzw. von einer Leuchtdiode einer LED-Wand gebildet bzw. dargestellt sein, während es auch möglich ist, dass mehrere solcher Leuchtmittel in einem gemeinsamen Hintergrundbereich zusammengefasst sind. Die Steuereinrichtung kann dazu ausgebildet sein, jeden der Vielzahl von Hintergrundbereichen individuell in Abhängigkeit von den empfangenen Objektivdaten anzupassen bzw. einzustellen.

Die Positionsinformationen können bei einigen Ausführungsformen Abstände der Hintergrundbereiche von der Hintergrund-Wiedergabeeinrichtung umfassen, wobei die Steuereinrichtung dazu ausgebildet sein kann, die gespeicherten Abstände auszulesen und bei dem Anpassen der Darstellung des virtuellen Hintergrunds zu berücksichtigen. Die Abstände können dabei angeben, in welcher Entfernung sich ein jeweiliger Bereich eines realen, dem virtuellen Hintergrund entsprechenden Hintergrunds zu der Hintergrund-Wiedergabeeinrichtung befinden würde. Dabei können beispielsweise in dem virtuellen Hintergrund angeordnete Objekte jeweiligen Hintergrundbereichen zugeordnet sein.

Beispielsweise kann die Steuereinrichtung dazu ausgebildet sein, aus den von den Positionsinformationen umfassten Abständen der Hintergrundbereiche zu der Hintergrund-Wiedergabeeinrichtung Abstände der Hintergrundbereiche zu der Kamera zumindest näherungsweise zu bestimmen bzw. den Hintergrundbereichen jeweilige Abstände zu der Kamera zuzuordnen. Wird nun eine Einstellung an dem Objektiv der Kamera vorgenommen und ein entsprechender Objektiveinstellungswert, beispielsweise eine Blendenöffnung, an die Steuereinrichtung übermittelt, kann diese dazu ausgebildet sein, anhand des Abstands des Hintergrundbereichs zu der Kamera und der empfangenen Objektivdaten zu bestimmen, wie sich die Einstellung des Objektivs auf eine theoretische Abbildung eines dem virtuellen Hintergrund entsprechenden realen Hintergrunds niederschlägt, in welchem der Hintergrundbereich den zuvor bestimmten Abstand zu der Kamera aufweist. Ferner kann die Steuereinrichtung dazu ausgebildet sein, zu ermitteln, welchen Effekt die Einstellung des Objektivs auf die tatsächlich von der Kamera erzeugte Abbildung von der Darstellung des virtuellen Hintergrunds hat, in welchem der Abstand der Hintergrundbereiche zu der Kamera dem Abstand der Kamera zu dem Abschnitt der

Hintergrund-Wiedergabeeinrichtung entspricht, in welchem der Hintergrundbereich dargestellt wird. Durch einen Vergleich der Effekte in der theoretischen Abbildung des realen Hintergrunds und in der von der Kamera tatsächlich erzeugten Abbildung der Darstellung des virtuellen Hintergrunds können daraufhin die notwendigen Anpassungen der Darstellung derart vorgenommen werden, dass der Hintergrundbereich in der Abbildung der Darstellung des virtuellen Hintergrunds mittels der Kamera in gleicher bzw. ähnlicher Weise abgebildet wird wie in der theoretischen Abbildung bei einem Abbilden des realen Hintergrunds.

Ferner kann die Steuereinrichtung bei einigen Ausführungsformen dazu ausgebildet sein, die Darstellung des virtuellen Hintergrunds anhand der für die Vielzahl von Hintergrundbereichen gespeicherten Bildinformationen zu erzeugen und die Darstellung in Abhängigkeit von der für die Vielzahl von Hintergrundbereichen gespeicherten Positionsinformationen und den empfangenen Objektivdaten anzupassen. Die Bildinformationen können dabei ein grundlegendes Modell bzw. die Darstellung des virtuellen Hintergrunds bestimmen, welches beispielsweise jeder einer Vielzahl von Leuchtmitteln, insbesondere Leuchtdioden, einer Beleuchtungseinrichtung bzw. LED-Wand der Hintergrund-Wiedergabeeinrichtung bzw. Arrays solcher Leuchtmittel eine Farbe und/oder ein Helligkeitswert zuordnet. Insbesondere können die Bildinformationen dazu vorgesehen sein, eine vollständig scharfe Darstellung des virtuellen Hintergrunds zu erzeugen, welche in Abhängigkeit von den empfangenen Objektivdaten angepasst werden kann. Es kann vorgesehen sein, dass die Steuereinrichtung dazu ausgebildet ist, zum Erzeugen der Darstellung eine Game-Engine zu nutzen.

Um insbesondere abstandsabhängige Abbildungseffekte, die von den empfangenen Objektivdaten abhängen, durch das Anpassen der Darstellung in einer von der Kamera erzeugten Abbildung nachbilden zu können, können die gespeicherten und der Vielzahl von Hintergrundbereichen zugeordneten Positionsinformationen herangezogen werden. Beispielsweise können anhand der Positionsinformationen Abstände der Hintergrundbereiche zu der Kamera bestimmt oder zugeordnet werden, um zu ermitteln, wie und insbesondere mit welcher Schärfe bzw. Unschärfe die Hintergrundbereiche in einer theoretischen Abbildung eines realen Hintergrunds abgebildet würden. Dies ermöglicht es, bestimmte Hintergrundbereiche in Abhängigkeit von deren Position und den empfangenen Objektivdaten beispielsweise bereits unscharf mittels der Hintergrund-Wiedergabeeinrichtung darzustellen, so dass in der Abbildung der Darstellung des virtuellen Hintergrunds eine Unschärfe erreicht werden kann, die der Unschärfe in einer theoretischen Abbildung des realen Hintergrunds entspricht.

Es kann vorgesehen sein, dass in dem Speicher Einstellanweisungen für die Hintergrund-Wiedergabeeinrichtung in Abhängigkeit von den empfangenen Objektivdaten gespeichert sind, wobei die Steuereinrichtung dazu ausgebildet sein kann, die Hintergrund-Wiedergabeeinrichtung anhand der Einstellanweisungen zum Anpassen der Darstellung des virtuellen Hintergrunds anzusteuern. Beispielsweise können dazu verschiedene Modelle in dem Speicher gespeichert sein, anhand derer die Darstellung des virtuellen Hintergrunds erzeugt werden kann. Die Modelle können dabei beispielsweise in einer Nachschlagetabelle jeweiligen Objektivdaten zugeordnet sein, so dass die Steuereinrichtung das für die empfangenen Objektivdaten passende Modell aus der Nachschlagetabelle ermitteln und zum Anpassen der Darstellung des virtuellen Hintergrunds verwenden kann. Insbesondere können dabei Einstellanweisungen für jedes Leuchtmittel oder für jeweilige Gruppen von Leuchtmitteln einer Beleuchtungseinrichtung der Hintergrund-Wiedergabeeinrichtung, insbesondere einer LED-Wand, gespeichert sein.

Bei einer Zuordnung von Einstellanweisungen zu Objektivdaten, die zumindest einen Objektiveinstellungswert umfassen, kann es vorgesehen sein, dass die Steuereinrichtung dazu ausgebildet ist, zwischen zwei Einstellanweisungen zu interpolieren, wenn der empfangene Objektiveinstellungswert zwischen zwei Werten liegt, für welche Einstellanweisungen in dem Speicher gespeichert sind. Alternativ dazu kann die Steuereinrichtung dazu ausgebildet sein, näherungsweise die Einstellanweisungen für einen benachbarten Objektiveinstellungswert zu verwenden.

Bei einigen Ausführungsformen kann die Steuereinrichtung eine Berechnungseinrichtung aufweisen, welche dazu ausgebildet ist, für eine Vielzahl von Hintergrundbereichen Abbildungsparameter einer theoretischen Abbildung, die bei einer Abbildung eines dem virtuellen Hintergrund entsprechenden realen Hintergrunds mittels der zugeordneten Kamera gemäß den empfangenen Objektivdaten entstehen würde, und Abbildungsparameter einer mittels der zugeordneten Kamera bei den empfangenen Objektivdaten erzeugbaren Abbildung der Darstellung des virtuellen Hintergrunds zu bestimmen, wobei die Steuereinrichtung dazu ausgebildet sein kann, die Darstellung des virtuellen Hintergrunds an der Hintergrund-Wiedergabeeinrichtung derart anzupassen, dass sich die Abbildungsparameter der Abbildung den Abbildungsparametern der theoretischen Abbildung annähern. Insbesondere kann die Berechnungseinrichtung dabei dazu ausgebildet sein, die Abbildungsparameter für die Vielzahl von Hintergrundbereichen zu berechnen, die in dem bereits genannten Speicher für das Modell des virtuellen Hintergrunds abgespeichert sein können. Die Berechnungseinrichtung kann beispielsweise als ein Mikroprozessor und/oder eine CPU und/oder eine GPU bzw. ein Teil davon vorgesehen sein, welcher zum Ausführen softwarebasierter Berechnungsschritte oder Abfragen ausgebildet ist. Grundsätzlich können die Steuereinrichtung und die Berechnungseinrichtung in einer gemeinsamen Einheit zusammengefasst sein, während es auch möglich ist, dass die Berechnungseinrichtung als ein separates Bauteil ausgebildet ist, welches mit der Steuereinrichtung verbunden ist.

Beispielsweise kann die Berechnungseinrichtung auf eine Positionsinformation, die den jeweiligen Hintergrundbereichen zugeordnet ist, zugreifen und anhand dieser Positionsinformation einen Abbildungsparameter der theoretischen Abbildung für den jeweiligen Hintergrundbereich in Abhängigkeit von den empfangenen Objektivdaten berechnen. Ein solcher Abbildungsparameter kann beispielsweise ein Maß für eine Unschärfe, beispielsweise ein Durchmesser von Zerstreuungskreisen, die in der Abbildung entstehen, oder ein Maß für eine Helligkeit sein, mit welcher ein jeweiliger Hintergrundbereich in der Abbildung abgebildet wird. Solche Abbildungsparameter können insbesondere sowohl von den Objektivdaten bzw. Einstellungen des Objektivs repräsentierenden Objektiveinstellungswerten, beispielsweise einer Brennweite, einer Fokusentfernung und/oder einer Blendenöffnung des Objektivs der zugeordneten Kamera, als auch von dem Abstand der Hintergrundbereiche zu der Kamera abhängen, so dass sich die Abbildungsparameter in der theoretischen Abbildung des realen Hintergrunds und in der tatsächlich erzeugten Abbildung der von der Hintergrund-Wiedergabeeinrichtung wiedergegebenen Darstellung des virtuellen Hintergrunds voneinander unterscheiden können. Die Berechnungseinrichtung kann entsprechend dazu ausgebildet sein, die jeweiligen Abbildungsparameter für die Abbildung der Darstellung des virtuellen Hintergrunds, insbesondere unter Berücksichtigung des Abstands der Hintergrund-Wiedergabeeinrichtung zu der zugeordneten Kamera, zu berechnen.

Die Berechnungseinrichtung und/oder die Steuereinrichtung kann dazu ausgebildet sein, die für die theoretische Abbildung und für die tatsächlich von der Kamera erzeugte Abbildung berechneten Abbildungsparameter miteinander zu vergleichen. Basierend auf einem solchen Vergleich kann die Steuereinrichtung dazu ausgebildet sein, die Darstellung des virtuellen Hintergrunds bzw. des Hintergrundbereichs an der Hintergrund-Wiedergabeeinrichtung derart anzupassen, dass sich die Abbildungsparameter einander annähern. Beispielsweise kann dabei eine Relation zwischen errechneten Durchmessern von Zerstreuungskreisen gebildet werden, als welcher ein jeweiliger Punkt in einem Hintergrundbereich in der mittels der Kamera erzeugbaren Abbildung der Darstellung des virtuellen Hintergrunds und in der theoretischen Abbildung des realen Hintergrunds abgebildet wird, und es kann eine diese Relation widerspiegelnde Anzahl von Leuchtmitteln der Hintergrund-Wiedergabeeinrichtung mit gleichen Einstellungen angesteuert werden, um in der theoretischen Abbildung erwartete Zerstreuungskreise in der Abbildung der Darstellung des virtuellen Hintergrunds nachbilden zu können. Ferner kann die Berechnungseinrichtung dazu ausgebildet sein, mögliche Einstellanweisungen für die Hintergrund-Wiedergabeeinrichtung rechnerisch anzupassen und den zu erwartenden Abbildungsparameter in der von der Kamera erzeugbaren Abbildung der Darstellung des virtuellen Hintergrunds zu ermitteln, um eine Einstellanweisung zu generieren, bei welcher der Abbildungsparameter dem Abbildungsparameter der theoretischen Abbildung möglichst angenähert ist. Die Einstellanweisungen können dabei insbesondere Farb- und/oder Helligkeitseinstellungen von Leuchtmitteln der Hintergrund-Wiedergabeeinrichtung betreffen.

Ferner kann die Berechnungseinrichtung dazu ausgebildet sein, eine theoretische Abbildung, die bei Abbilden eines dem virtuellen Hintergrund entsprechenden realen Hintergrunds mittels der Kamera entstehen würde, und eine Abbildung der Darstellung des virtuellen Hintergrunds mittels der Kamera in Abhängigkeit von den Objektivdaten zu bestimmen, wobei die Berechnungseinrichtung und/oder die Steuereinrichtung dazu ausgebildet sein kann, durch einen Vergleich der beiden Abbildungen Einstellanweisungen für die Hintergrund-Wiedergabeeinrichtung zu bestimmen. Beispielsweise kann die Berechnungseinrichtung dazu ausgebildet sein, für verschiedene Objektivdaten, insbesondere verschiedene Objektiveinstellungswerte, die theoretische Abbildung sowie die Abbildung der Darstellung des virtuellen Hintergrunds zu berechnen bzw. zu simulieren und die Einstellanweisungen für die Hintergrund-Wiedergabeeinrichtung rechnerisch solange anzupassen, bis die errechnete bzw. simulierte Abbildung der Darstellung des virtuellen Hintergrunds der theoretischen Abbildung möglichst nah ist. Dazu können beispielsweise Bildanalyseverfahren eingesetzt bzw. von der Berechnungseinrichtung ausgeführt werden. Die so ermittelten Einstellungen können dann als Einstellanweisungen an die Steuereinrichtung übermittelt bzw. von dieser empfangen werden, um die Hintergrund-Wiedergabeeinrichtung anzusteuern.

Die Berechnungseinrichtung kann bei einigen Ausführungsformen dazu ausgebildet sein, die Abbildungsparameter der Abbildung und/oder die Abbildungsparameter der theoretischen Abbildung in Abhängigkeit von den empfangenen Objektivdaten zu berechnen. Alternativ oder zusätzlich kann die Berechnungseinrichtung dazu ausgebildet sein, die Abbildungsparameter der Abbildung und/oder die Abbildungsparameter der theoretischen Abbildung in Abhängigkeit von den empfangenen Objektivdaten in einer Datenbank nachzuschlagen. Insbesondere für die theoretische Abbildung, die bei einer Abbildung eines dem virtuellen Hintergrund entsprechenden realen Hintergrunds mittels der Kamera entstehen würde, können Abbildungsparameter in Abhängigkeit von Objektivdaten, insbesondere von Objektiveinstellungswerten, in einer Datenbank gespeichert sein. Zudem können Abbildungsparameter für die von der Kamera erzeugbare Abbildung der Darstellung des virtuellen Hintergrunds in Abhängigkeit von den empfangenen Objektivdaten in der Datenbank gespeichert sein, insbesondere bei verschiedenen Einstellungen der Hintergrund-Wiedergabeeinrichtung und für verschiedene Hintergrundbereiche. Dadurch kann für jeden Hintergrundbereich unmittelbar eine Einstellung der Hintergrund-Wiedergabeeinrichtung ermittelt werden, bei welcher die Abbildungsparameter einander möglichst angenähert sind, und die Darstellung kann dementsprechend von der Steuereinrichtung angepasst werden. Alternativ dazu kann die Berechnungseinrichtung dazu ausgebildet sein, die Abbildungsparameter in Abhängigkeit von den empfangenen Objektivdaten, insbesondere unter Berücksichtigung jeweiliger Positionsinformationen der Hintergrundbereiche, zu berechnen.

Die Berechnungseinrichtung kann bei einigen Ausführungsformen dazu ausgebildet sein, Einstellanweisungen für die Hintergrund-Wiedergabeeinrichtung anhand der bestimmten Abbildungsparameter der Abbildung und der bestimmten Abbildungsparameter der theoretischen Abbildung zu ermitteln, wobei die Steuereinrichtung dazu ausgebildet sein kann, die Einstellanweisungen zum Anpassen der Darstellung des virtuellen Hintergrunds auszuführen. Insbesondere kann die Berechnungseinrichtung dazu ausgebildet sein, durch einen Vergleich der Abbildungsparameter der Abbildung und der theoretischen Abbildung die Einstellanweisungen zu ermitteln. Beispielsweise kann die Berechnungseinrichtung für einen jeweiligen Hintergrundbereich eine Helligkeit, mit welcher der Hintergrundbereich abgebildet wird, in Abhängigkeit von einer Blendenöffnung, die als Objektiveinstellungswert bzw. mit den Objektivdaten übermittelt werden kann, als Abbildungsparameter berechnen und eine Einstellanweisung ausgeben, so dass der betreffende Hintergrundbereich in der von der Kamera erzeugbaren Abbildung der Darstellung des virtuellen Hintergrunds mit einer Helligkeit abgebildet wird, die der Helligkeit des Hintergrundbereichs in der theoretischen Abbildung eines dem virtuellen Hintergrund entsprechenden realen Hintergrunds entspricht. Erfährt beispielsweise ein Hintergrundbereich aufgrund eines Schließens einer Blendenöffnung eine stärkere Verdunkelung in der theoretischen Abbildung als der entsprechende Hintergrundbereich in der Abbildung der Darstellung des virtuellen Hintergrunds, kann dieser Hintergrundbereich an der Hintergrund-Wiedergabeeinrichtung derart verdunkelt dargestellt werden, dass letztlich dieselbe Verdunkelung in der Abbildung der Darstellung des virtuellen Hintergrunds wie in der theoretischen Abbildung resultiert.

Bei einigen Ausführungsformen kann die Berechnungseinrichtung dazu ausgebildet sein, ein Maß für eine Unschärfe der Hintergrundbereiche in der Abbildung und in der theoretischen Abbildung zu bestimmen. Beispielsweise kann dazu ein Durchmesser von Zerstreuungskreisen als Maß für eine Unschärfe bestimmt werden und zur Anpassung der Darstellung des virtuellen Hintergrunds als Abbildungsparameter genutzt werden.

Dabei kann die Berechnungseinrichtung dazu ausgebildet sein, das Maß für die Unschärfe der Hintergrundbereiche in Abhängigkeit von einer Blendenöffnung und/oder einer Brennweite und/oder einer Fokusentfernung der Kamera zu bestimmen. Beispielsweise kann die Berechnungseinrichtung anhand der Blendenöffnung und jeweiligen Hintergrundbereichen zugeordneten Positionsinformationen einen Durchmesser von Zerstreuungskreisen berechnen und als Abbildungsparameter verwenden.

Ferner kann die Berechnungseinrichtung dazu ausgebildet sein, eine Schärfentiefe in Abhängigkeit von einer Blendenöffnung und/oder einer Brennweite und/oder einer Fokusentfernung zu bestimmen. Die Schärfentiefe bezeichnet dabei einen Bereich von Abständen zu der Kamera, in welchem darin angeordnete Objekte scharf von der Kamera abgebildet werden. Durch das Berechnen einer Schärfentiefe können insbesondere Hintergrundbereiche ermittelt werden, die in der theoretischen Abbildung eines dem virtuellen Hintergrund entsprechenden realen Hintergrunds gemäß den empfangenen Objektivdaten im Bereich der Schärfentiefe liegen und dementsprechend in einer theoretischen Abbildung des realen Hintergrunds scharf dargestellt würden. Für diese Hintergrundbereiche kann die Hintergrund-Wiedergabeeinrichtung insbesondere derart eingestellt werden, dass die Hintergrundbereiche mit maximaler Schärfe dargestellt werden. Außerhalb der Schärfentiefe für die empfangenen Objektivdaten liegende Hintergrundbereiche in einem dem virtuellen Hintergrund entsprechenden realen Hintergrund können hingegen in der von der Hintergrund-Wiedergabeeinrichtung erzeugten Darstellung unschärfer dargestellt werden, um in der von der Kamera erzeugten Abbildung der Darstellung ein natürliches Bokeh erzeugen zu können. Beispielsweise kann die Entfernung eines jeweiligen Hintergrundbereichs von der Schärfentiefe bzw. einer vorderen und/oder hinteren Hyperfokalebene eine zu erzeugende Unschärfe in der Darstellung des virtuellen Hintergrunds bestimmen, so dass die Schärfentiefe bzw. diese Entfernung ein Maß für die Unschärfe bilden können.

Ferner kann die Berechnungseinrichtung dazu ausgebildet sein, die Hintergrundbereiche in jeweilige Schärfenbereiche einzuteilen, wobei die Steuereinrichtung dazu ausgebildet sein kann, die Hintergrund-Wiedergabeeinrichtung zu einem Darstellen der Hintergrundbereiche mit einer einem jeweiligen Schärfebereich zugeordneten Schärfe anzusteuern. Beispielsweise kann die Berechnungseinrichtung dazu ausgebildet sein, die Hintergrundbereiche in Abhängigkeit von einem Abstand zu einer berechneten vorderen und/oder hinteren Hypervokalebene in verschiedene Schärfenbereiche einzuteilen. In Abhängigkeit von einem jeweiligen Schärfenbereich, der einem Hintergrundbereich zugeordnet ist, können daraufhin Einstellanweisungen für die Hintergrund-Wiedergabeeinrichtung ermittelt bzw. erzeugt werden, um die Hintergrundbereiche mit einer jeweiligen Unschärfe darzustellen. Beispielsweise können den Schärfebereichen dazu eine Anzahl von benachbarten Leuchtmitteln der Hintergrund-Wiedergabeeinrichtung zugeordnet werden, die zum Erzeugen einer Unschärfe mit gleichen Einstellungen, insbesondere gleicher Farbe und/oder Helligkeit, zu betreiben ist. Insbesondere können dabei in den Schärfebereichen jeweilige der theoretischen Abbildung angenäherte Zerstreuungskreise in der Abbildung der Darstellung des virtuellen Hintergrunds erzeugt werden, wobei solche Zerstreuungskreise beispielsweise zufällig in den jeweiligen Schärfebereichen verteilt oder um jeweilige hellste Punkte gebildet werden können. Zum Verteilen der Zerstreuungskreise können zudem beispielsweise Informationen über das verwendete Objektiv oder digitale Filter, die mit dem Objektiv korrelieren, verwendet werden.

Die Berechnungseinrichtung kann bei einigen Ausführungsformen dazu ausgebildet sein, Durchmesser von Zerstreuungskreisen in der Abbildung und in der theoretischen Abbildung für die Hintergrundbereiche in Abhängigkeit von einer Blendenöffnung und/oder einer Brennweite und/oder einer Fokusentfernung zu bestimmen. Ferner kann die Berechnungseinrichtung dazu ausgebildet sein, Einstellanweisungen für die Hintergrund-Wiedergabeeinrichtung derart zu generieren, dass sich die Durchmesser der Zerstreuungskreise in der Abbildung den Durchmessern in der theoretischen Abbildung annähern. Zudem kann es vorgesehen sein, dass die Darstellung derart von der Steuereinrichtung angepasst wird, dass sich in der theoretischen Abbildung eines dem virtuellen Hintergrund entsprechenden realen Hintergrunds bildende Zerstreuungskreise auch in der Abbildung der Darstellung des virtuellen Hintergrunds entstehen, um ein möglichst natürliches Bokeh der Abbildung zu erhalten. Beispielsweise kann die Hintergrund-Wiedergabeeinrichtung dazu derart angesteuert werden, dass jeweilige hellste Punkte in dem virtuellen Hintergrund als Kreise abgebildet werden, die in der Abbildung den in der theoretischen Abbildung erwarteten Durchmesser aufweisen.

Ferner kann die Berechnungseinrichtung dazu ausgebildet sein, Überlagerungen von Zerstreuungskreisen in der Abbildung und in der theoretischen Abbildung zu bestimmen. Dazu kann die Berechnungseinrichtung insbesondere auf ein in einem Speicher gespeichertes Modell des virtuellen Hintergrunds und/oder eine übermittelte Information über ein mit der Kamera verbundenes Objektiv, insbesondere Wechselobjektiv, zurückgreifen, so dass beim Anpassen der Darstellung des virtuellen Hintergrunds mittels der Hintergrund-Wiedergabeeinrichtung auch solche, objektivspezifische und/oder abstandsabhängige Überlagerungen von Zerstreuungskreisen berücksichtigt werden können, um das Bokeh in der Abbildung der Darstellung des virtuellen Hintergrunds möglichst detailgetreu wiedergeben zu können.

Die Berechnungseinrichtung kann bei einigen Ausführungsformen dazu ausgebildet sein, als Abbildungsparameter ein Maß für eine Helligkeit der Hintergrundbereiche in der Abbildung und in der theoretischen Abbildung zu bestimmen.

Die Berechnungseinrichtung kann dabei dazu ausgebildet sein, das Maß für die Helligkeit in Abhängigkeit von einer Blendenöffnung zu bestimmen, wobei die Berechnungseinrichtung insbesondere dazu ausgebildet sein kann, eine abstandsabhängige Helligkeitsänderung in Abhängigkeit von der Blendenöffnung zu bestimmen. Beispielsweise kann die Berechnungseinrichtung dazu einen Anteil eines aus einer bestimmten Entfernung, insbesondere isotrop, emittierten Lichts ermitteln, welcher in Abhängigkeit von der Blendenöffnung auf einen Bildsensor der Kamera auftrifft. Dieser Anteil kann beispielsweise durch einen Öffnungswinkel eines Kegels von Strahlen bestimmt werden, die ausgehend von einem Objekt in der Darstellung des virtuellen Hintergrunds bzw. in dem realen Hintergrund durch die Blendenöffnung gelangen. Dies kann es ermöglichen, ein Verhältnis der Helligkeit eines Hintergrundbereichs in der theoretischen Abbildung zu der Helligkeit des Hintergrundbereichs in der Abbildung der Darstellung des virtuellen Hintergrunds zu bestimmen und den Hintergrundbereich unter Berücksichtigung dieses Verhältnisses mittels der Hintergrund-Wiedergabeeinrichtung angepasst darzustellen.

Alternativ oder zusätzlich kann es bei einigen Ausführungsformen vorgesehen sein, dass die Berechnungseinrichtung dazu ausgebildet ist, die Abbildungsparameter in Abhängigkeit von einer Information über ein mit der Kamera verbundenes Objektiv zu bestimmen. Insbesondere kann die Kamera dabei mit einem Wechselobjektiv verbindbar sein, so dass anhand der Information bestimmt werden kann, welches bzw. welche Art von Objektiv verwendet wird, um die Darstellung entsprechend anpassen und beispielsweise Formen von Unschärfebereichen in der von der Kamera erzeugten Abbildung der Darstellung des virtuellen Hintergrunds den Formen dieser Unschärfebereiche in einer theoretischen Abbildung anzugleichen, welche die Kamera bei einem Abbilden eines dem virtuellen Hintergrund entsprechenden realen Hintergrunds erzeugen würde. Insbesondere kann die Berechnungseinrichtung dabei in Abhängigkeit von einer Information über den Objektivtyp und von empfangenen Objektiveinstellungswerten jeweilige Abbildungsparameter in einer Datenbank nachschlagen, um Einstellanweisungen für die Hintergrund-Wiedergabeeinrichtung zum Anpassen der Darstellung des virtuellen Hintergrunds zu generieren, die von der Steuereinrichtung umgesetzt werden können.

Die Information kann dabei abstandsabhängige optische Aberrationen des Wechselobjektivs umfassen. Insbesondere können solche Aberrationen Formen von Zerstreuungskreisen, deren Durchmesser und/oder Beugungseffekte umfassen. Ferner kann die Information grundsätzlich jedwede Eigenschaft des Objektivs und beispielsweise eine Form einer Irisblende, insbesondere eine Anzahl von Flügeln bzw. Lamellen der Irisblende, eine Anzahl, Anordnung und/oder Eigenschaften zylindrischer Elemente von anamorphotischen Objektiven und/oder Eigenschaften etwaiger Beschichtungen von Elementen des Objektivs, beispielsweise von Linsen, umfassen.

Ferner kann die Berechnungseinrichtung dazu ausgebildet sein, auf eine Datenbank mit Rechenvorschriften zum Bestimmen von Einstellanweisungen für die Hintergrund-Wiedergabeeinrichtung zuzugreifen und die Einstellanweisungen anhand der Rechenvorschriften in Abhängigkeit von der Information zu bestimmen. Beispielsweise können in einer solchen Datenbank digitale Filter, die mit dem Objektivtyp korrelieren, gespeichert sein, wobei die Berechnungseinrichtung anhand solcher digitaler Filter die theoretische Abbildung und/oder die Abbildung der Darstellung des virtuellen Hintergrunds berechnen kann, um durch einen Vergleich der beiden Abbildungen Einstellanweisungen für die Hintergrund-Wiedergabeeinrichtung ermitteln bzw. generieren zu können. Dabei können als Objektivdaten übermittelte Werte von Parametern des Objektivs bzw. Objektiveinstellungswerte in einen solchen digitalen Filter eingesetzt werden, so dass mittels des digitalen Filters sowohl objektivspezifische Effekte, beispielsweise eine Form eines Unschärfebereichs, als auch die Einstellung des jeweiligen Objektivs berücksichtigt werden können.

Die Erfindung bezieht sich ferner auf ein Aufnahmesystem mit einem Hintergrund-Wiedergabesystem wie hierin offenbart und mit einer Kamera, welche ein Kameraobjektiv aufweist und dazu ausgebildet ist, Objektivdaten des Kameraobjektivs an den Dateneingang der Steuereinrichtung zu übermitteln. Insbesondere kann es sich bei dem Aufnahmesystem um ein Bewegtbildaufnahmesystem handeln, so dass die Kamera als Bewegtbildkamera zum Aufnehmen einer Szene, insbesondere einer Filmszene, ausgebildet sein kann. Alternativ dazu kann es auch vorgesehen sein, mittels einer wie vorstehend beschriebenen Hintergrund-Wiedergabeeinrichtung einen virtuellen Hintergrund darzustellen, der als Hintergrund für eine Fotoaufnahme dient, so dass die Kamera auch als Fotokamera ausgebildet sein kann.

Indem die Kamera dazu ausgebildet ist, Objektivdaten des Kameraobjektivs an den Dateneingang der Steuereinrichtung zu übermitteln, können diese Objektivdaten beim Steuern der Hintergrund-Wiedergabeeinrichtung berücksichtigt werden. Insbesondere ermöglicht dies, die Darstellung des virtuellen Hintergrunds in Abhängigkeit von den empfangenen Objektivdaten derart anzupassen, dass sich die von der Kamera erzeugte Abbildung einer theoretischen Abbildung annähert, die die Kamera erzeugen würde, wenn ein dem virtuellen Hintergrund entsprechender realer Hintergrund aufgenommen würde. Die Darstellung kann dabei insbesondere derart angepasst werden, dass ein möglichst natürlich anmutendes Bokeh der von der Darstellung des virtuellen Hintergrunds mittels der Kamera erzeugten Abbildung erreicht werden kann.

Die Kamera kann einen Bildsensor aufweisen, um auftreffendes Licht in elektrische Signale verwandeln und eine Abbildung erzeugen zu können. Ferner kann das Objektiv eine Linse und/oder ein Linsensystem aufweisen, um auftreffendes Licht auf den Bildsensor leiten zu können. Das Objektiv kann eine Blende mit einer Blendenöffnung aufweisen, die wahlweise geöffnet oder geschlossen werden kann, um den Anteil an Licht, welcher auf den Bildsensor gelangt, sowie eine Schärfentiefe anpassen zu können. Ferner kann es vorgesehen sein, dass eine Brennweite bzw. Fokusentfernung des Objektivs bzw. des Linsensystems anpassbar ist, wozu beispielsweise eine oder mehrere Linsen des Linsensystems relativ zueinander verschiebbar sein können. Solche Anpassungen von Parametern des Objektivs können beispielsweise durch manuelles und/oder elektrisches Drehen eines oder mehrerer Objektivringe vorgenommen werden.

Bei einigen Ausführungsformen kann das Aufnahmesystem eine Positionsbestimmungseinrichtung aufweisen, die dazu ausgebildet ist, eine Position der Kamera relativ zu der Hintergrund-Wiedergabeeinrichtung zu bestimmen und entsprechende Positionsdaten an den Dateneingang der Steuereinrichtung zu übermitteln. Beispielsweise kann die Positionsbestimmungseinrichtung dazu Hilfskameras umfassen, welche die Position der für die Aufnahme einer Szene vorgesehenen Kamera relativ zu der Hintergrund-Wiedergabeeinrichtung optisch erfassen.

Auch die Positionsdaten können dazu genutzt werden, die Darstellung des virtuellen Hintergrunds derart anzupassen, dass die von der Kamera erzeugte Abbildung einer theoretischen Abbildung eines dem virtuellen Hintergrund entsprechenden realen Hintergrunds angenähert wird. Insbesondere bei Bewegungen der Kamera während der Aufnahme einer Szene bzw. einer Filmszene können Objekte in der Darstellung des virtuellen Hintergrunds dadurch derart verschoben werden, dass die Position der Objekte in der Abbildung der Darstellung des virtuellen Hintergrunds der Position dieser Objekte in der theoretischen Abbildung des realen Hintergrunds entspricht.

Ferner betrifft die Erfindung ein Verfahren zum Steuern einer Hintergrund-Wiedergabeeinrichtung gemäß Anspruch 12, welche dazu ausgebildet ist, hinter oder über einem realen Motiv eine Darstellung eines virtuellen Hintergrunds für eine Aufnahme mittels einer zugeordneten Kamera wiederzugeben, mit den Schritten:
- Empfangen von Objektivdaten der zugeordneten Kamera; und
- Anpassen der Darstellung des virtuellen Hintergrunds in Abhängigkeit von den empfangenen Objektivdaten.

Wie vorstehend bereits in Bezug auf das Hintergrundwiedergabesystem und das Aufnahmesystem erläutert, ermöglicht es eine derartige Steuerung einer Hintergrund-Wiedergabeeinrichtung insbesondere, eine mittels der Hintergrund-Wiedergabeeinrichtung erzeugte Darstellung des virtuellen Hintergrunds derart anzupassen, dass eine mittels der zugeordneten Kamera erzeugte bzw. erzeugbare Abbildung der Darstellung des virtuellen Hintergrunds einer theoretischen Abbildung angenähert wird, welche die Kamera bei einer Aufnahme eines dem virtuellen Hintergrund entsprechenden realen Hintergrunds erzeugen würde. Insbesondere können dabei abstandsabhängige Effekte in der Abbildung der Darstellung des virtuellen Hintergrunds nachgebildet werden. Bei einigen Ausführungsformen kann das Verfahren ferner folgende Schritte umfassen:
- Aufnehmen eines realen Motivs vor der Hintergrund-Wiedergabeeinrichtung mittels der zugeordneten Kamera:
- Erfassen von Objektivdaten eines Kameraobjektivs der zugeordneten Kamera; und
- Übermitteln der Objektivdaten an die Hintergrund-Wiedergabeeinrichtung oder an eine der Hintergrund-Wiedergabeeinrichtung zugeordnete Steuereinrichtung.

Insbesondere können die Objektivdaten dabei Objektiveinstellungswerte bzw. Werte von Parametern des Objektivs umfassen. Zum Erfassen der Objektiveinstellungswerte kann die Kamera jeweilige Sensoren umfassen, die beispielsweise zum Ermitteln einer Drehstellung eines Objektivrings zum Anpassen einer Blendenöffnung, einer Brennweite und/oder einer Fokusentfernung ausgebildet sein können.

Bei einigen Ausführungsformen kann die Hintergrund-Wiedergabeeinrichtung eine flächige aktive Beleuchtungseinrichtung aufweisen. Wiederum ermöglicht die aktive Beleuchtungseinrichtung das Darstellen des virtuellen Hintergrunds, indem mehrere Leuchtmittel, insbesondere Leuchtdioden bzw. LEDs oder OLEDs, individuell oder in jeweiligen Gruppen angesteuert werden können. Ferner ist es auch möglich, Bewegungen in dem virtuellen Hintergrund darzustellen, beispielsweise während einer Filmszene vorbeifahrende Autos.

Die Objektivdaten können bei einigen Ausführungsformen eingestellte Werte wenigstens eines der folgenden Objektivparameter repräsentieren: eine Blendenöffnung, eine Fokusentfernung und/oder eine Brennweite. Insbesondere können diese Parameter abstandsabhängige Effekte in einer mittels der Kamera erzeugbare Abbildung generieren. Diese Effekte können dabei durch Berücksichtigen der Objektivdaten bei dem Anpassen der Darstellung des virtuellen Hintergrunds in einer Abbildung dieser Darstellung mittels der Kamera derart nachgebildet werden, dass die Effekte denjenigen in einer theoretischen Abbildung eines dem virtuellen Hintergrund entsprechenden realen Hintergrunds gleichen. Ferner können die Objektivdaten bei einigen Ausführungsformen eine Information über das verwendete Objektiv umfassen, insbesondere einen Objektivtyp und/oder eine Kennzeichnung des jeweiligen verwendeten Objektivs, beispielsweise eine Seriennummer. Dadurch können auch objektivspezifische Effekte in der Abbildung der Darstellung des virtuellen Hintergrunds nachgebildet werden.

Bei einigen Ausführungsformen kann der virtuelle Hintergrund eine dreidimensionale Szene repräsentieren und verschiedene Bereiche der dreidimensionalen Szene können in Abhängigkeit von den empfangenen Objektivdaten in unterschiedlicher Schärfe dargestellt werden. Insbesondere können dabei den jeweiligen Bereichen zugeordnete Abstandswerte von der Hintergrund-Wiedergabeeinrichtung und/oder der Kamera bei der Einstellung der Schärfe in der Darstellung dieser Bereiche berücksichtigt werden.

Es kann vorgesehen sein, dass die Darstellung des virtuellen Hintergrunds derart angepasst wird, dass eine mittels der zugeordneten Kamera bei den übermittelten Objektivdaten erzeugbare Abbildung der Darstellung des virtuellen Hintergrunds einer theoretischen Abbildung angenähert wird, die bei Abbilden eines dem virtuellen Hintergrund entsprechenden realen Hintergrunds mittels der zugeordneten Kamera entstehen würde. Insbesondere kann die Darstellung dabei derart angepasst werden, dass abstandsabhängige Effekte in der Abbildung der Darstellung des virtuellen Hintergrunds nachgebildet werden.

Erfindungsgemäß wird die Darstellung des virtuellen Hintergrunds derart angepasst, dass abstandsabhängige Abbildungseffekte, die bei Abbilden eines dem virtuellen Hintergrund entsprechenden realen Hintergrunds mittels der zugeordneten Kamera gemäß den empfangenen Objektivdaten entstehen würden, in der von der Kamera erzeugbaren Abbildung der Darstellung des virtuellen Hintergrunds nachgebildet werden, wobei die nachgebildeten abstandsabhängigen Abbildungseffekte eine abstandsabhängige Unschärfe in der von der Kamera erzeugbaren Abbildung umfassen.

Abstandsabhängige Effekte, die insbesondere auch bei einem Verändern von als Objektivdaten übermittelten Objektiveinstellungswerten während einer Aufnahme entstehen bzw. sich verändern können, gehen somit nicht beispielsweise aufgrund der Wiedergabe des virtuellen Hintergrunds auf der Hintergrund-Wiedergabeeinrichtung, die insbesondere flächig und/oder zweidimensional ausgebildet sein kann, verloren, sondern können durch Anpassen der Darstellung des virtuellen Hintergrunds in der Abbildung, die von der Kamera erzeugt wird, nachgebildet werden. Insbesondere kann dadurch in der Abbildung ein Bokeh erzeugt werden, welches dem bei einer theoretischen Abbildung eines dem virtuellen Hintergrund entsprechenden realen Hintergrunds entstehenden Bokeh entspricht und/oder angenähert ist.

Die Darstellung des virtuellen Hintergrunds kann bei einigen Ausführungsformen anhand eines Modells erzeugt werden, welches aus einem Speicher ausgelesen wird. Dabei kann das gespeicherte Modell des virtuellen Hintergrunds für eine Vielzahl von Hintergrundbereichen eine jeweilige Bildinformation und eine jeweilige Positionsinformation umfassen. Grundsätzlich kann die Bildinformation dabei zum Erzeugen der Darstellung des virtuellen Hintergrunds dienen, während die Positionsinformation gemeinsam mit den empfangenen Objektivdaten zum Anpassen der Darstellung genutzt werden kann.

Ferner kann es bei einigen Ausführungsformen vorgesehen sein, dass Durchmesser von Zerstreuungskreisen in einer mittels der Kamera erzeugbaren Abbildung der Darstellung des virtuellen Hintergrunds und Durchmesser von Zerstreuungskreisen in einer theoretischen Abbildung, die bei Abbilden eines dem virtuellen Hintergrund entsprechenden realen Hintergrunds mittels der Kamera entstehen würde, für eine Vielzahl von Hintergrundbereichen in Abhängigkeit von den Objektivdaten bestimmt werden, wobei die Darstellung des virtuellen Hintergrunds derart angepasst werden kann, dass sich die Durchmesser der Zerstreuungskreise in der Abbildung den Durchmessern der Zerstreuungskreise in der theoretischen Abbildung annähern. Insbesondere können die Durchmesser von Zerstreuungskreisen als Maß für eine Unschärfe dienen, wobei durch das Erzeugen von Zerstreuungskreisen mit dem Durchmesser von Zerstreuungskreisen in der theoretischen Abbildung entsprechendem Durchmesser insbesondere abstandabhängige Unschärfeeffekte in der Abbildung der Darstellung des virtuellen Hintergrunds nachgebildet werden können.

Darüber hinaus können bei dem Verfahren grundsätzlich sämtliche Schritte oder eine Auswahl von Schritten vorgesehen sein, die vorstehend in Bezug auf die Steuereinrichtung bzw. die Berechnungseinrichtung des Hintergrundwiedergabesystems und/oder die Hintergrund-Wiedergabeeinrichtung beschrieben sind.

Die Erfindung wird im Folgenden rein beispielhaft anhand von Ausführungsbeispielen in Bezug auf die Zeichnungen erläutert.

Es zeigen:
- Fig. 1: eine schematische Darstellung eines Aufnahmesystems für ein Bildaufnahmestudio mit einem Hintergrundwiedergabesystem und einer Kamera,
- Fig. 2A und 2B: eine schematische Darstellung einer mittels der Kamera durchgeführten Aufnahme vor einem von einer Hintergrund-Wiedergabeeinrichtung des Hintergrundwiedergabesystems erzeugten virtuellen Hintergrund sowie eine schematische Darstellung einer Aufnahme vor einem dem virtuellen Hintergrund entsprechenden realen Hintergrund,
- Fig. 3A und 3B: eine schematische Darstellung einer von der Kamera erzeugbaren Abbildung bei einer Aufnahme des virtuellen Hintergrunds sowie eine schematische Darstellung einer theoretischen Abbildung, welche bei einer Aufnahme des realen Hintergrunds mittels der Kamera entstehen würde,
- Fig. 4: eine weitere schematische Darstellung des Aufnahmesystems zur Veranschaulichung des Anpassens der von der Hintergrund-Wiedergabeeinrichtung erzeugten Darstellung des virtuellen Hintergrunds in Abhängigkeit von empfangenen Objektivdaten,
- Fig. 5: eine schematische Darstellung des Aufnahmesystems bei angepasster Darstellung des virtuellen Hintergrunds,
- Fig. 6A bis 6F: jeweilige schematische Veranschaulichungen eines Strahlengangs durch die Kamera bei einer Aufnahme des virtuellen Hintergrunds bzw. des realen Hintergrunds bei verschiedenen als Objektivdaten übermittelbaren Objektiveinstellungswerten,
- Fig. 7A und 7B: eine jeweilige schematische Veranschaulichung zum Erzeugen eines der theoretischen Abbildung des realen Hintergrunds entsprechenden Zerstreuungskreises bei einer Aufnahme des virtuellen Hintergrunds und
- Fig. 8A bis 8F: jeweilige schematische Veranschaulichungen zum Anpassen der von der Hintergrund-Wiedergabeeinrichtung erzeugten Darstellung des virtuellen Hintergrunds in Abhängigkeit von ermittelten Positionsdaten der Kamera.

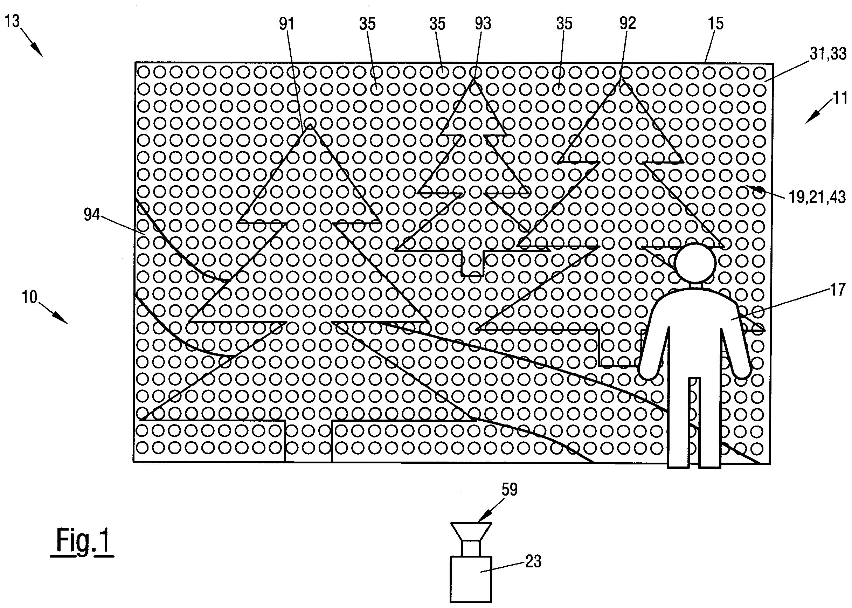

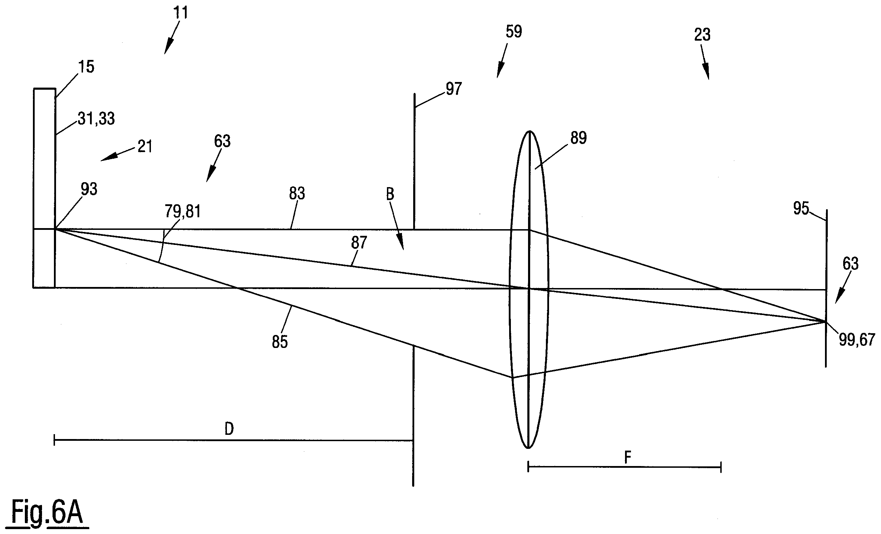

Fig. 1 zeigt schematisch ein virtuelles Bildaufnahmestudio 13, in welchen eine Szene, insbesondere in Form einer Bewegtbildaufnahme und/oder einer Fotoaufnahme, mittels einer zugeordneten Kamera 23 aufgenommen werden kann. Die Kamera 23 kann dabei insbesondere als Bewegtbildkamera ausgebildet sein, um Bewegtbildaufnahmen durchführen zu können, die als eine Folge von durch die Kamera 23 erzeugten Abbildungen 39 gespeichert werden können. Dazu weist die Kamera 23 ein Objektiv 59 auf, welches insbesondere als Wechselobjektiv ausgebildet sein kann, das wahlweise mit einem Gehäuse der Kamera 23 verbunden werden kann. Dadurch kann stets ein jeweiliges optimal an die Umgebung in dem Bildaufnahmestudio 13 angepasstes Objektiv 59 genutzt werden, um bestmögliche Aufnahmen erstellen zu können. In dem Gehäuse der Kamera 23 kann insbesondere ein Bildsensor 95 angeordnet sein, auf welchen durch eine Blendenöffnung B einer Blende 97 eindringendes Licht mittels eines Linsensystems bzw. zumindest einer Linse 89 zum Erzeugen einer Abbildung 39 geleitet werden kann (vgl. auch Fig. 6A bis 6F).

Ferner ist in dem Bildaufnahmestudio 13 ein Hintergrundwiedergabesystem 11 mit einer Hintergrund-Wiedergabeeinrichtung 15 angeordnet, welches gemeinsam mit der Kamera 23 Teil eines Aufnahmesystems 10 ist. Die Hintergrund-Wiedergabeeinrichtung 15 umfasst eine als LED-Wand 33 ausgebildete aktive Beleuchtungseinrichtung 31 und ist dazu ausgebildet, eine Darstellung 19 eines virtuellen Hintergrunds 21 für eine Aufnahme mittels der Kamera 23 wiederzugeben. Dazu weist die Beleuchtungseinrichtung 31 bzw. die LED-Wand 33 eine Vielzahl einzeln ansteuerbarer Leuchtdioden 35 auf, die in einer flächigen Anordnung nebeneinander angeordnet sind. Alternativ dazu kann die aktive Beleuchtungseinrichtung 31 beispielsweise eine OLED-Wand aufweisen oder die Hintergrund-Wiedergabeeinrichtung 15 kann dazu ausgebildet sein, die Darstellung 19 des virtuellen Hintergrunds 21 mittels einer Rückseitenprojektion zu erzeugen.

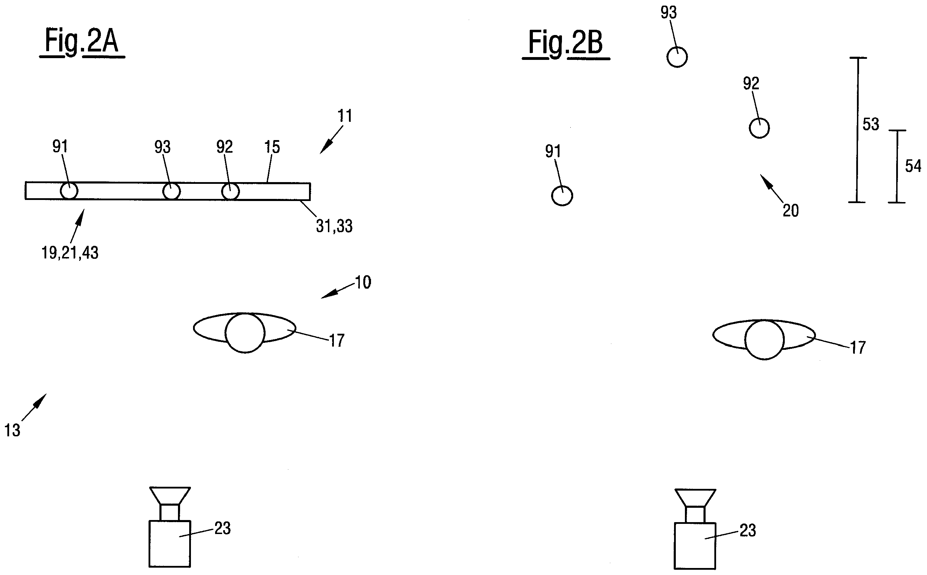

Die Darstellung 19 des virtuellen Hintergrunds 21 spiegelt hier beispielhaft eine dreidimensionale Szene 43 mit Objekten 91, 92, 93 und 94, drei Bäumen und einem Weg, wider, die durch geeignetes Ansteuern der Leuchtdioden 35, insbesondere geeignetes Einstellen deren jeweiliger Farbe und Helligkeit, erzeugt werden kann. Die dreidimensionale Szene 43 ist dabei auf die im Wesentlichen zweidimensionale Anordnung der Leuchtdioden 35 der Beleuchtungseinrichtung 31 projiziert, wobei insbesondere die Objekte 91, 92 und 93 in einem unterschiedlichen Abstand zu der Beleuchtungseinrichtung 31 bzw. der Hintergrund-Wiedergabeeinrichtung 11 erscheinen, um die Dreidimensionalität eines dem virtuellen Hintergrund 21 entsprechenden realen Hintergrunds 20 nachzubilden (vgl. auch Fig. 2A und 2B).

Insbesondere dient die Darstellung 19 des virtuellen Hintergrunds 21 mittels der Hintergrund-Wiedergabeeinrichtung 15 dazu, einen Hintergrund für eine Aufnahme eines realen Motivs 17, beispielsweise eines Schauspielers, zu erzeugen, vor welchem eine Aufnahme erfolgen bzw. eine Filmszene gespielt werden kann. Dadurch können in dem Bildaufnahmestudio 13 grundsätzlich beliebige Landschaften, Räume oder Umgebungen geschaffen werden, vor bzw. in welchen eine Szene beispielsweise für einen Kinofilm gedreht werden soll. Dabei ist es auch möglich, durch eine sich zeitlich verändernde Ansteuerung der Leuchtdioden 35 Bewegungen in dem virtuellem Hintergrund 21, zum Beispiel ein vorbeifahrendes Auto, darzustellen, auf welche der Schauspieler 17 im Vergleich zu einem Schauspiel vor einem Green-Screen vereinfacht und verbessert reagieren kann.

Die Hintergrund-Wiedergabeeinrichtung 15 erstreckt sich hier im Wesentlichen in der Vertikalen, so dass sich der Schauspieler 17 vor dem virtuellen Hintergrund 21 bewegen kann. Um den virtuellen Hintergrund 21 jedoch umfänglicher darstellen zu können, kann sich die Hintergrund-Wiedergabeeinrichtung 15 auch um den Schauspieler 17 herum oder oberhalb von diesem erstrecken, wobei die Hintergrund-Wiedergabeeinrichtung 15 über dem Schauspieler 17 insbesondere eine horizontale Ausrichtung aufweisen kann. Um den Schauspieler 17 umgeben oder einen Übergang von der gezeigten vertikalen Ausrichtung zu einer horizontalen Ausrichtung erzeugen zu können, kann die Hintergrund-Wiedergabeeinrichtung 15 bzw. die Beleuchtungseinrichtung 31 oder die LED-Wand 33 zumindest abschnittsweise auch gewölbt bzw. gekrümmt sein.

Zusätzlich zu dem Darstellen des virtuellen Hintergrunds 21 kann die Hintergrund-Wiedergabeeinrichtung 15 auch dazu dienen, das reale Motiv 17 zu beleuchten und dadurch beispielsweise eine weitere Studiobeleuchtung des Bildaufnahmestudios 13 unterstützen. Ferner kann durch ein Beleuchten des realen Motivs 17 mittels der Hintergrund-Wiedergabeeinrichtung die Wechselwirkung des realen Motivs 17 bzw. des Schauspielers 17 mit in dem virtuellen Hintergrund 21 vorhandenen Lichtquellen, beispielsweise Laternen oder Lampen, verbessert werden, indem das reale Motiv 17 einen Schatten wirft, der mit den in der von der Kamera 23 erzeugten Abbildung 39 sichtbaren Lichtverhältnissen korrespondiert.

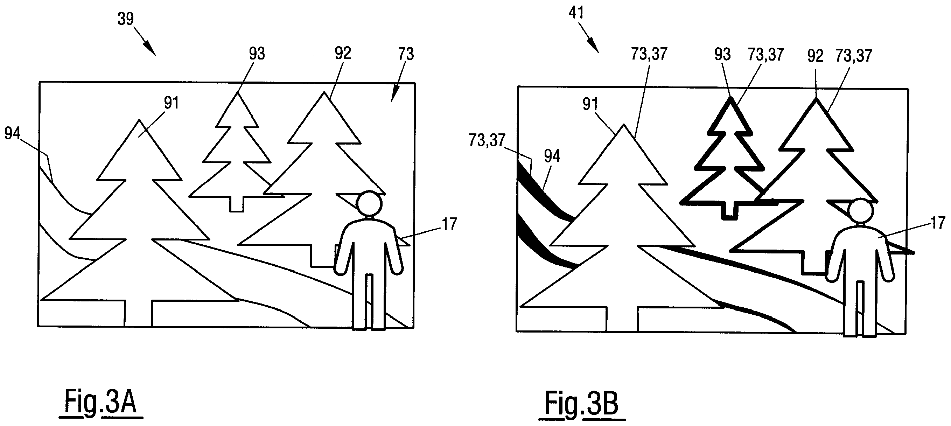

Während eine solche Hintergrund-Wiedergabeeinrichtung 15 somit vielfältige und komfortable Möglichkeiten zur Aufnahme von Szenen, insbesondere Bewegtbildaufnahmen, in einem Bildaufnahmestudio 13 mit grundsätzlich beliebigen virtuellen Hintergründen 21 bieten kann, können sich insbesondere durch die Projektion der dreidimensionalen Szene 43 auf die flächige Hintergrund-Wiedergabeeinrichtung 15 Unterschiede zwischen einer von der Kamera 23 erzeugten Abbildung 39 der Darstellung 19 des virtuellen Hintergrunds 21 und einer theoretischen Abbildung 41 ergeben, welche die Kamera 23 bei einer Aufnahme des dem virtuellen Hintergrund 21 entsprechenden realen Hintergrunds 20 erzeugen würde (vgl. Fig. 3A und 3B).

Wie die Fig. 2A und 2B verdeutlichen, weisen die in der Darstellung 19 des virtuellen Hintergrunds 21 auf die Beleuchtungseinrichtung 31 projizierten Objekte 92 und 93 in dem dem virtuellen Hintergrund 21 entsprechenden realen Hintergrund 20 jeweilige Abstände 54 und 53 zu der Hintergrund-Wiedergabeeinrichtung 11 auf, so dass sich die in Fig. 3B gezeigte theoretische Abbildung 41 des realen Hintergrunds 20 von der Abbildung 39 des virtuellen Hintergrunds 21 bzw. dessen Darstellung 19 unterscheiden kann, wie aus dem Vergleich zu Fig. 3A hervorgeht. Insbesondere werden dabei weiter entfernte Objekte 92 und 93 sowie ein Teil des Objekts 94 in der theoretischen Abbildung 41 unscharf dargestellt, während die Objekte 91, 92, 93 und 94 in der Abbildung 39 vollständig scharf dargestellt werden. Dabei können sich auch Einstellungen des Objektivs 59 bzw. Veränderungen der Einstellungen unterschiedlich auf die Abbildung 39 der Darstellung 19 des virtuellen Hintergrunds 21 und die theoretische Abbildung 41 des realen Hintergrunds 20 auswirken.

Beispielsweise kann eine Blendenöffnung B bzw. die Öffnungsweite einer Irisblende des Objektivs 59 eine Schärfentiefe 69 des Objektivs 59 beeinflussen, so dass die Objekte 91, 92 und 93 in Abhängigkeit von ihrem Abstand 53, 54 zu der Kamera 23 und in Abhängigkeit von der Blendenöffnung B in der theoretischen Abbildung 41 des dem virtuellen Hintergrund 21 entsprechenden realen Hintergrunds 20 mit einer unterschiedlichen Schärfe 73 abgebildet werden (vgl. Fig. 3B). Ist die Kamera 23 hingegen auf die Hintergrund-Wiedergabeeinrichtung 11 fokussiert eingestellt, so ist dieser abstandsabhängige Abbildungseffekt 37 einer sich unterscheidenden Schärfe 73 in der Abbildung 39 der Darstellung 19 des virtuellen Hintergrunds 21 nicht wiedergegeben. Vielmehr sind sämtliche Objekte 91, 92 und 93 mit gleicher und hier beispielhaft voller Schärfe 73 abgebildet, bei einer Fokussierung auf die Hintergrund-Wiedergabeeinrichtung 15 auch unabhängig von der Blendenöffnung B (vgl. Fig. 3A sowie Fig. 6A bis 6D).

Die mit diesen abstandsabhängigen Abbildungseffekten 37 einhergehenden Schärfe- bzw. Unschärfeverläufe in der theoretischen Abbildung 41 können somit in der Abbildung 39, welche die Kamera 23 von der Darstellung 19 des virtuellen Hintergrunds 21 erstellt, verlorengehen. Eine solche Textur der Schärfe eines Hintergrunds kann jedoch das Bokeh der Abbildung 39 bestimmen, wobei das Erzeugen eines angenehmen und realistischen Bokehs gerade ein Anliegen bei einer solchen Aufnahme sein kann und auch die Wahl des Objektivs 59, welches mit der Kamera 23 verbunden wird, mitbestimmen kann. Zudem können sich während der Aufnahme einer Szene wechselnde Einstellungen des Objektivs 59, beispielsweise durch Öffnen oder Schlie-βen der Blende 97, abstandsabhängig und verschieden auf die Schärfe 73 der Objekte 91, 92, 93 und 94 in der theoretischen Abbildung 41 auswirken, wobei das sich entsprechend in der theoretischen Abbildung 41 des realen Hintergrunds 20 ändernde Bokeh möglichst auch in der mittels der Kamera 23 erzeugten Abbildung 39 des virtuellen Hintergrunds 21 erzeugt werden soll.

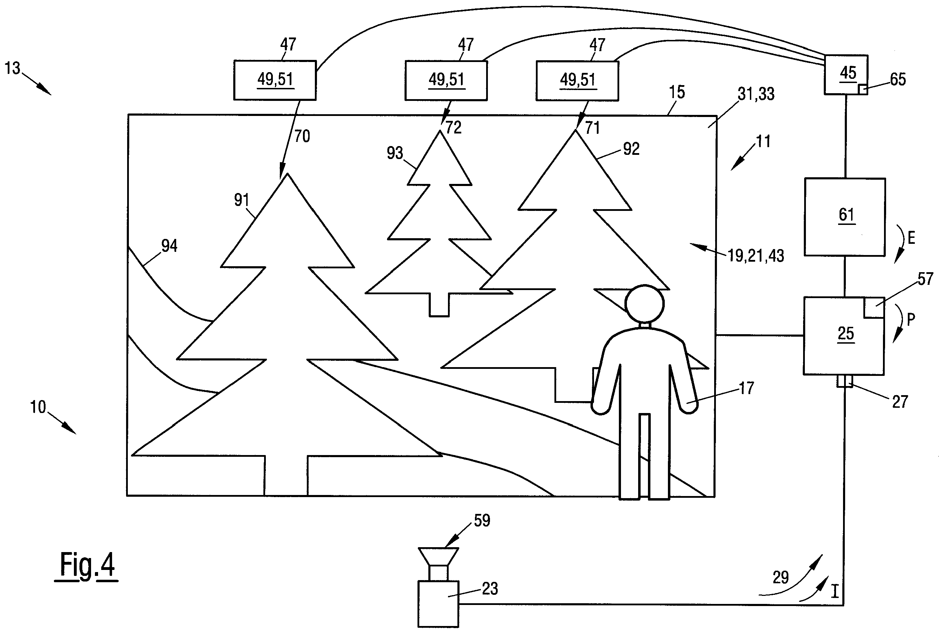

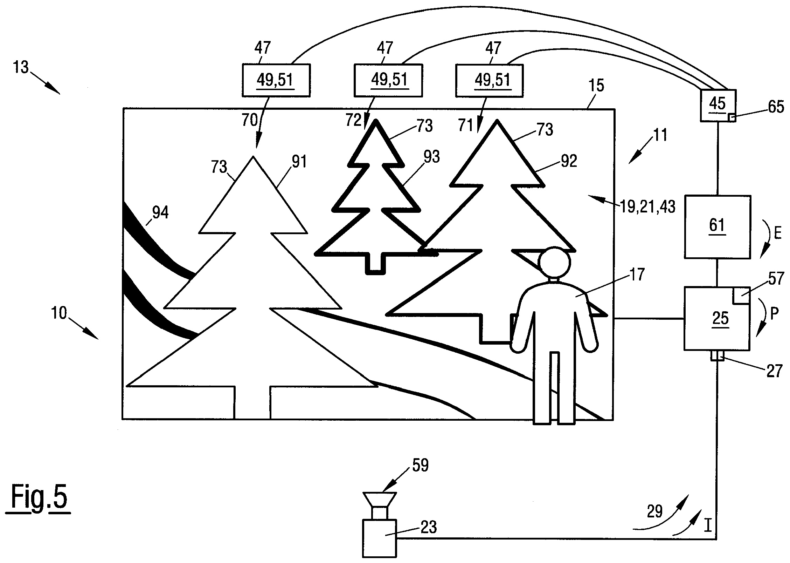

Um diesem Problem zu begegnen, weist, wie Fig. 4 zeigt, das Hintergrundwiedergabesystem 11 eine Steuereinrichtung 25 auf, welche mit der Hintergrund-Wiedergabeeinrichtung 15 verbunden und zum Steuern der Hintergrund-Wiedergabeeinrichtung 15 ausgebildet ist. Dabei weist die Steuereinrichtung 25, die beispielsweise als Mikroprozessor ausgebildet sein kann, einen Dateneingang 27 auf, um von der Kamera 23 übermittelte Objektivdaten 29 zu empfangen, und die Steuereinrichtung 25 ist dazu ausgebildet, die Darstellung 19 des virtuellen Hintergrunds 21 in Abhängigkeit von den empfangenen Objektivdaten 29 anzupassen (vgl. auch Fig. 5).

Die Objektivdaten 29 können dabei insbesondere Objektiveinstellungswerte bzw. Werte von Parametern des Objektivs 59, auf welche diese Parameter eingestellt sind, und/oder eine Information I über das verwendete Objektiv 59 umfassen. Beispielsweise können die Objektivdaten 29 eine Blendenöffnung B, eine Fokusentfernung D und/oder eine Brennweite F des Objektivs 59 betreffen und Werte repräsentieren, auf welche diese Parameter des Objektivs 59 eingestellt bzw. einstellbar sind. Die Information I kann beispielsweise einen Objektivtyp, eine Kennzeichnung des verwendeten Objektivs 59 wie eine Seriennummer, eine Form einer Irisblende 97 des Objektivs 59, eine Anzahl von Flügeln der Blende 97, eine Anordnung oder Ausbildung zylindrischer Elemente eines anamorphotischen Objektivs 59 und/oder etwaige Beschichtungen optischer Elemente des Objektivs 59, beispielsweise von einzelnen Linsen 89, repräsentieren. Durch das Berücksichtigen solcher Objektivdaten 29 kann die Darstellung 19 des virtuellen Hintergrunds 21 insbesondere derart angepasst werden, dass die von der Kamera 23 erzeugte Abbildung 39 der theoretischen Abbildung 41 angenähert wird. Insbesondere können dabei verschiedene Bereiche der dreidimensionalen Szene 43 mit unterschiedlicher Schärfe 73 dargestellt werden, um in der Abbildung 39 einen Unschärfeverlauf der theoretischen Abbildung 41 nachzubilden.

Um die Darstellung 19 des virtuellen Hintergrunds 21 anzupassen, ist die Steuereinrichtung 25 mit einer Berechnungseinrichtung 61 und über die Berechnungseinrichtung 61 mit einem Speicher 45 verbunden. Die Berechnungseinrichtung 61 kann, wie hier veranschaulicht, als separate Einheit, beispielsweise als ein Mikroprozessor oder eine CPU, mit der Steuereinrichtung 25 verbunden sein. Alternativ dazu kann die Berechnungseinrichtung 61 auch in die Steuereinrichtung 25 integriert sein. Die Steuereinrichtung 25 kann auch direkt mit dem Speicher 45 verbunden sein.

In dem Speicher 45 ist ein Modell des virtuellen Hintergrunds 11 gespeichert, anhand dessen die Steuereinrichtung 25 die Darstellung 19 des virtuellen Hintergrunds 21 mittels der Hintergrund-Wiedergabeeinrichtung 15 erzeugen kann. Dabei umfasst das gespeicherte Modell für eine Vielzahl von Hintergrundbereichen 47 eine jeweilige Bildinformation 49 und eine jeweilige Positionsinformation 51. Die Positionsinformationen 51 können dabei beispielsweise die Abstände 53 und 54 der Objekte 93 und 92 von der Hintergrund-Wiedergabeeinrichtung 15 umfassen (vgl. Fig. 2B).

Die Steuereinrichtung 25 kann dazu ausgebildet sein, die Darstellung 19 des virtuellen Hintergrunds 21 anhand der Bildinformationen 49 für die Hintergrundbereiche 47 zu erzeugen und unter Berücksichtigung der Positionsinformationen 51 sowie der empfangenen Objektivdaten 29 anzupassen. Zum Erzeugen der Darstellung 19 kann die Steuereinrichtung 25 insbesondere eine Game-Engine nutzen. Beispielsweise kann die Berechnungseinrichtung 61 dazu ausgebildet sein, die Positionsinformationen 51, die alternativ oder zusätzlich zu den bereits genannten Abständen 53 und 54 auch dreidimensionale Koordinaten der Hintergrundbereiche 47 bzw. der Objekte 91, 92, 93 und 94 umfassen können, auszulesen und in Abhängigkeit von den empfangenen Objektivdaten 29 Einstellanweisungen E für die Steuereinrichtung 25 zu generieren, welche die Steuereinrichtung 25 zum Anpassen der Darstellung 19 des virtuellen Hintergrunds 21 ausführen kann. Beispielsweise kann die Berechnungseinrichtung 61 die jeweiligen Hintergrundbereiche 47 in Abhängigkeit von den empfangenen Objektivdaten 29, beispielsweise in Abhängigkeit von einer Blendenöffnung B, in jeweilige Schärfebereiche 70, 71 und 72 einteilen und die Steuereinrichtung 25 durch Übermitteln einer Einstellanweisung E dazu veranlassen, die Hintergrundbereiche 47 mit einer den jeweiligen Schärfebereich 70, 71 oder 72 entsprechenden Schärfe 73 darzustellen (vgl. Fig. 5).

Beispielsweise kann es vorgesehen sein, das in dem realen Hintergrund 20 am weitesten von der Hintergrund-Wiedergabeeinrichtung 15 bzw. der Kamera 23 entfernte Objekt 93 bzw. den Hintergrundbereich 47, in welchem sich dieses Objekt 93 befindet, unscharf mittels der Hintergrund-Wiedergabeeinrichtung 15 und auch das ebenfalls zu der Hintergrund-Wiedergabeeinrichtung 15 beabstandete Objekt 92 nicht vollständig scharf darzustellen (vgl. Fig. 5). Der Grad der Unschärfe kann dabei von den empfangen Objektivdaten 29 abhängen. Beispielsweise kann die Unschärfe der Objekte 92 und 93 in der Darstellung 19 bei einer weit geöffneten Blende 97 und damit einhergehender geringer Schärfentiefe 69 erhöht und bei weiter geschlossener Blende 97 verringert werden. Durch diese bereits in der Darstellung 19 des virtuellen Hintergrunds 21 wiedergegebene Unschärfe der Objekte 92 und 93 sowie eines Teils des Objekts 94 kann erreicht werden, dass die von der Kamera 23 erzeugte Abbildung 39 der Darstellung 19 des virtuellen Hintergrunds 21 sich der theoretischen Abbildung 41 annähert, welche die Kamera 23 bei Abbilden des dem virtuellen Hintergrund 21 entsprechenden realen Hintergrunds 20 erzeugen würde (vgl. Fig. 3A und 3B).

Um die Hintergrundbereiche 47 mittels der Hintergrund-Wiedergabeeinrichtung 15 derart anpassen zu können, dass sich die Abbildung 39 der theoretischen Abbildung 41 annähert, kann der Speicher 45 eine Datenbank 65 aufweisen, in welcher beispielsweise durch die Berechnungseinrichtung 61 oder die Steuereinrichtung 25 direkt auslesbare Zuordnungstabellen angelegt sein können, welche den Hintergrundbereichen 47 in Abhängigkeit von den empfangenen Objektivdaten 29 einen jeweiligen Schärfebereich 70, 71 oder 72 bzw. eine dementsprechende Schärfe 73 zuordnet. Dabei können in einer solchen Datenbank 65 insbesondere direkt Einstellanweisungen E gespeichert sein, welche den jeweiligen Hintergrundbereichen 47 in Abhängigkeit von den empfangenen Objektivdaten 29 zugeordnet sind und welche die Steuereinrichtung 25 unmittelbar zum Anpassen der Darstellung 19 des virtuellen Hintergrunds 21 bzw. der einzelnen Hintergrundbereiche 47 umsetzen kann. Ferner können in der Datenbank 65 bzw. dem Speicher 45 verschiedene Modelle des virtuellen Hintergrunds 21 gespeichert sein, die jeweiligen Objektivdaten 29 und insbesondere Kombinationen von Objektiveinstellungswerten zugeordnet sein können, wobei die Steuereinrichtung 25 dazu ausgebildet sein kann, basierend auf dem jeweiligen Modell in Abhängigkeit von den empfangenen Objektivdaten 29 die Darstellung 19 des virtuellen Hintergrunds 21 zu erzeugen bzw. durch Wechseln des zugrundeliegenden Modells anzupassen.

Alternativ zu einem Auslesen einer solchen Datenbank 65 bzw. des Speichers 45 kann es auch vorgesehen sein, dass die Berechnungseinrichtung 61 dazu ausgebildet ist, die Einstellanweisungen E für die Steuereinrichtung 25 zum Anpassen der Darstellung 19 des virtuellen Hintergrunds 21 rechnerisch zu bestimmen. Dazu kann die Berechnungseinrichtung 61 insbesondere dazu ausgebildet sein, Abbildungsparameter 63 für die Abbildung 39, welche die Kamera 23 von der Darstellung 19 des virtuellen Hintergrunds 21 erzeugt, und für die theoretische Abbildung 1, welche die Kamera 23 bei Abbilden des realen Hintergrund 20 erzeugen würde, zu berechnen und die Einstellanweisungen E für die Steuereinrichtung 25 derart zu generieren, dass sich die Abbildungsparameter 63 der Abbildung 39 den Abbildungsparametern 63 der theoretischen Abbildung 41 annähern.

Die Fig. 6A bis 6F zeigen schematische Strahlengänge durch das Objektiv 59 bzw. die Kamera 23 eines oberen Punktes des am weitesten entfernten Objekts 93 für die Darstellung 19 des virtuellen Hintergrunds 21 und für den realen Hintergrund 20. Das Objektiv 59 ist hierbei zur Veranschaulichung vereinfacht mit lediglich einer Linse 89 ausgebildet bzw. dargestellt, die einfallendes Licht auf den Bildsensor 95 leitet. Grundsätzlich können jedoch auch komplexere Linsensysteme mit beispielsweise mehreren zusammenwirkenden Linsen 89 vorgesehen sein. Die Berechnungseinrichtung 61 kann insbesondere dazu ausgebildet sein, anhand solcher Überlegungen oder Simulationen bzw. Berechnungen solcher Strahlengänge durch das jeweilige Objektiv 59 Abbildungsparameter 63 zu bestimmen und Einstellanweisungen E zum Anpassen der Darstellung 19 des virtuellen Hintergrunds 21 zu generieren. Bei solchen Simulationen kann die Berechnungseinrichtung 61 zusätzlich auf eine von der Kamera 23 an den Dateneingang 27 der Steuereinrichtung 25 übermittelte Informationen I über das Objektiv 59 zurückgreifen, um die Simulationen beispielsweise anhand digitaler Filter, welche mit dem jeweiligen Objektivtyp korrelieren, durchführen und objektivspezifische Effekte ermitteln zu können (vgl. auch Fig. 4).

In dem Beispiel der Fig. 6A ist eine Fokusentfernung D des Objektivs 59 bzw. dessen Brennweite F derart gewählt, dass sich die Hintergrund-Wiedergabeeinrichtung 15 und somit auch das durch die Beleuchtungseinrichtung 31 bzw. die LED-Wand 33 dargestellte Objekt 93 im Fokus der Kamera 23 befindet. Das Objektiv 59 weist dabei die bereits erwähnte Blende 97 mit verstellbarer Blendenöffnung B auf, durch welche von dem Objekt 93 ausgehende Strahlen 83, 85 und 87 auf die Linse 89 treffen, welche die Strahlen 83, 85 und 87 auf den Bildsensor 95 lenkt. Aufgrund der Fokussierung der Kamera 23 auf die Hintergrund-Wiedergabeeinrichtung 15 wird jeder auf der Beleuchtungseinrichtung 31 dargestellte Punkt und somit auch des dargestellten Objekts 93 scharf als ein Punkt 99 auf dem Bildsensor 95 abgebildet. Die Schärfe 73 der Objekte 91, 92, 93 und 94 in der Abbildung 39 hängt somit im Wesentlichen von der Auflösung des Bildsensors 95 und der Anzahl an Leuchtdioden 35 pro Flächeneinheit ab, welche die Darstellung 19 des virtuellen Hintergrunds 21 erzeugen.

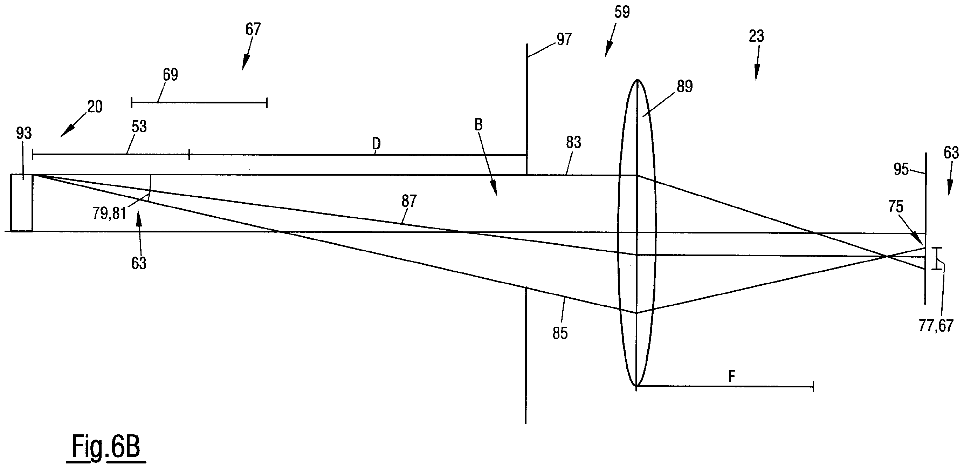

Wie Fig. 6B zeigt, befindet sich das Objekt 93 für den dem virtuellen Hintergrund 21 entsprechenden realen Hintergrund 20 hingegen nicht im Fokus der Kamera 23, sondern weist den bereits erwähnten Abstand 53 zu der Hintergrund-Wiedergabeeinrichtung 15 und damit zu dem Fokus der Kamera 23 auf. Dadurch treffen die Strahlen 83, 85 und 87 nicht exakt auf den Bildsensor 95, sondern bereits davor, zusammen, so dass ein Punkt des Objekts 93 bei einer Abbildung des realen Hintergrunds 20 mittels der Kamera 23 als ein Zerstreuungskreis 75 mit einem Durchmesser 77 in der theoretischen Abbildung 41 abgebildet würde.

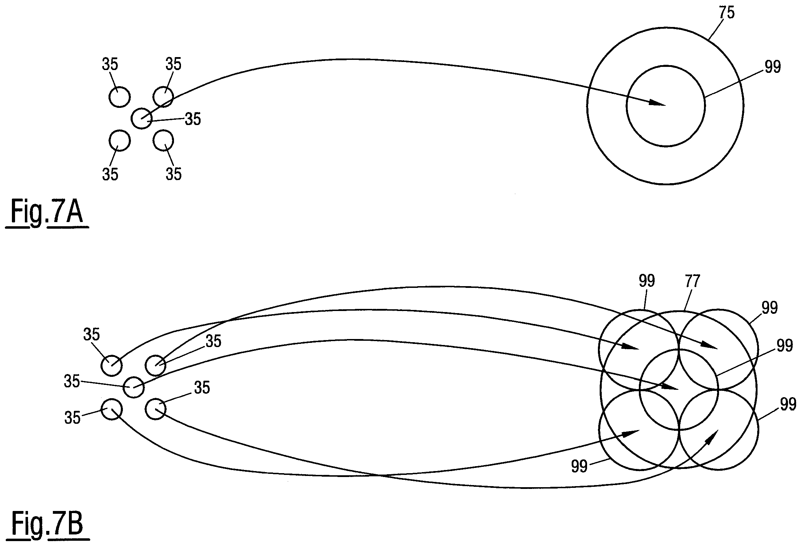

Beispielsweise kann die Berechnungseinrichtung 61 dazu ausgebildet sein, für Punkte bzw. durch einzelne oder mehrere Leuchtdioden 35 dargestellte Hintergrundbereiche 47 derartige Zerstreuungskreise 75 für den virtuellen Hintergrund 21 sowie den dem virtuellen Hintergrund 21 entsprechenden realen Hintergrund 20 zu bestimmen und als Abbildungsparameter 63 bzw. als ein Maß 67 für eine Unschärfe heranzuziehen. So können beispielsweise bei einer Fokussierung auf die Hintergrund-Wiedergabeeinrichtung 15, wie in den Fig. 6A und 6B, mehrere als Punkt 99 bzw. als Kreis mit minimalem Durchmesser abgebildete Leuchtdioden 35 mit gleicher Helligkeit und Farbe eingestellt werden, um den in der theoretischen Abbildung 41 des realen Hintergrunds 20 entstehenden Zerstreuungskreis 75 in der Abbildung 39 nachzubilden. Dies ist schematisch in den Fig. 7A und 7B veranschaulicht. Beispielsweise kann dabei eine Relation zwischen dem Durchmesser 77 des Zerstreuungskreises 75 in der theoretischen Abbildung 41 und dem Durchmesser des Punktes 99 bzw. des Kreises mit minimalem Durchmesser in der Abbildung 39 bestimmt werden, um die Anzahl gleich einzustellender Leuchtdioden 35 zum Nachbilden des Zerstreuungskreises 75 in der Abbildung 39 zu ermitteln. Um bestimmte, beispielsweise hellste, Punkte in den Hintergrundbereichen 47 als klare Zerstreuungskreise 75 abzubilden und für andere Bereiche einen realistischen Unschärfeverlauf erreichen zu können, kann die Berechnungseinrichtung 61 beispielsweise auf in dem Speicher 45 gespeicherte Modelle des virtuellen Hintergrunds 21 oder das Objektiv 59 betreffende Informationen I zurückgreifen.

Alternativ zu einem solchen Bestimmen von Durchmessern 77 von Zerstreuungskreisen 75 kann die Berechnungseinrichtung auch dazu ausgebildet sein, eine Schärfentiefe 69 des Objektivs 59 in Abhängigkeit von den empfangenen Objektivdaten 29, insbesondere der Blendenöffnung B, zu berechnen und unter Berücksichtigung der Positionsinformationen 49 für die Hintergrundbereiche 47 Einstellanweisungen E zum Anpassen der Darstellung 19 generieren. Beispielsweise können Abstände bzw. Entfernungen von Hintergrundbereichen 47 zu einer hinteren und/oder vorderen Hyperfokalebene genutzt werden, um die Hintergrundbereiche 47 in jeweilige Schärfebereiche 70, 71 und 72 einzuteilen und entsprechende Einstellungsanweisungen E für die Steuereinrichtung 25 zu ermitteln. Die Steuereinrichtung 25 kann dabei dazu ausgebildet sein, die Hintergrund-Wiedergabeeinrichtung 15 zu einem Darstellen der Hintergrundbereiche 47 bzw. der darin angeordneten Objekte 91, 92, 93 oder 94 mit einer dem jeweiligen Schärfebereich 70, 71 oder 72 zugeordneten Schärfe 73 anzusteuern. Auch die Schärfentiefe 69 bzw. die Abstände der Objekte 91, 92, 93 und 94 in dem realen Hintergrund 20 und dem virtuellen Hintergrund 21 zu den Hyperfokalebenen können somit als ein Maß 67 für die Unschärfe genutzt werden, um die Darstellung 19 anzupassen und dadurch die von der Kamera 23 erzeugte Abbildung 39 zu beeinflussen.

Alternativ oder zusätzlich zu solchen Abbildungsparametern 63 wie dem Durchmesser 77 von Zerstreuungskreisen 75 oder Entfernungen zu Hyperfokalebenen, die als ein Maß 67 für eine Unschärfe von Hintergrundbereichen 47 dienen können, kann die Berechnungseinrichtung 61 auch dazu ausgebildet sein, ein Maß 79 für eine Helligkeit der Hintergrundbereiche 47 zu bestimmen und beim Ermitteln von Einstellanweisungen E für die Steuereinrichtung 25 zu berücksichtigen. Wie der Vergleich zwischen den Fig. 6A und 6B zeigt, führt der unterschiedliche Abstand zwischen dem Objekt 93 und der Linse 89 des Objektivs 59 bei einem Abbilden des virtuellen Hintergrunds 21 und einem Abbilden des realen Hintergrunds 20 zusätzlich zu den erläuterten Unschärfeeffekten auch dazu, dass sich jeweilige Winkel 81 zwischen äußeren Strahlen 83 und 85, welche ausgehend von dem Objekt 93 die Linse 89 erreichen und auf den Bildsensor 95 geleitet werden, voneinander unterscheiden. Dementsprechend unterscheidet sich auch die Helligkeit des Objekts 93 in der Abbildung 39 der Darstellung 19 des virtuellen Hintergrunds 21 von der Helligkeit des Objekts 93 in der theoretischen Abbildung 41 des dem virtuellen Hintergrund 21 entsprechenden realen Hintergrunds 20. Auch dies kann beim Anpassen der Darstellung 19 berücksichtigt werden, indem beispielsweise die Winkel 81 als Abbildungsparameter 63 berücksichtigt werden und in dem realen Hintergrund 20 weiter entfernte Objekte, insbesondere das Objekt 93, verdunktelt dargestellt werden können, so dass das Objekt 93 mit einer der Helligkeit bei einem Abbilden des realen Hintergrunds 20 entsprechenden oder angenäherten Helligkeit in der Abbildung 39 der Darstellung 19 des virtuellen Hintergrunds 21 abgebildet werden kann.

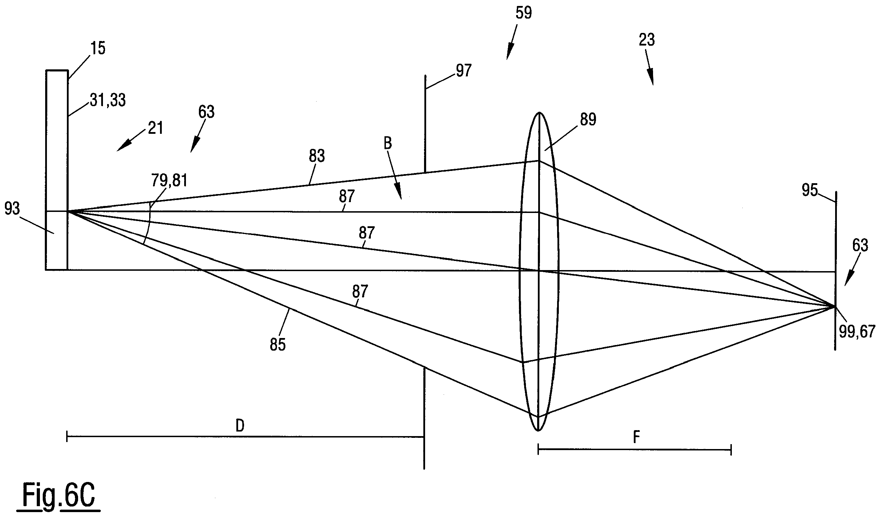

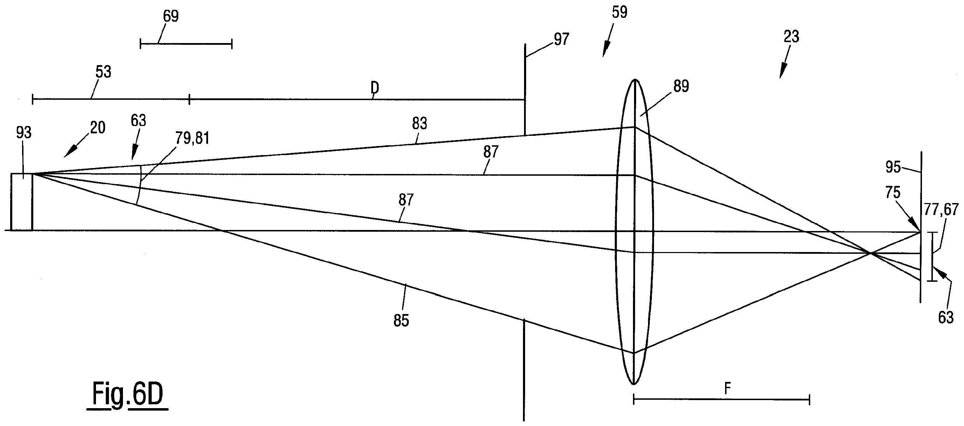

Die Fig. 6C und 6D zeigen wiederum schematisch den Strahlengang von einem Punkt des Objekts 93 bei einer Darstellung mittels der Hintergrund-Wiedergabeeinrichtung 15 des virtuellen Hintergrunds 21 bzw. unter der Annahme eines Abbildens des realen Hintergrunds 20. Im Vergleich zu den Fig. 6A und 6B ist hierbei die Blendenöffnung B erhöht, wodurch sich die Schärfentiefe 69 verringert.

Wie Fig. 6C zeigt, wird auch bei dieser größeren Blendenöffnung B das Objekt 93 in der Darstellung 19 des virtuellen Hintergrunds 21 aufgrund der Fokussierung der Kamera 23 auf die Hintergrund-Wiedergabeeinrichtung 15 scharf auf dem Bildsensor 95 abgebildet, so dass sich in der Abbildung 39 lediglich die Helligkeit des Objekts 93 erhöht. Da das Objekt 93 bei dem realen Hintergrund 20 hingegen nicht in der Fokusentfernung D positioniert ist, erhöht sich beim Öffnen der Blende 97 aufgrund der verringerten Schärfentiefe 69 der Durchmesser 77 des auf dem Bildsensor 95 registrierten Zerstreuungskreises 75. Auch die mit der Blendenöffnung B einhergehende Veränderung der Helligkeit des Objekts 93 unterscheidet sich für die Abbildung 39 und die theoretische Abbildung 41, da sich die Winkel 81 zwischen den äußeren Strahlen 83 und 85 nicht in gleicher Weise ändern. Durch ein entsprechendes Anpassen der Darstellung 19 des virtuellen Hintergrunds 21 kann dabei erreicht werden, solche abstandsabhängige Abbildungseffekte 37 in Abhängigkeit von den empfangenen Objektivdaten 29, hier also beispielhaft das Entstehen von Zerstreuungskreisen 75 mit einem von der Blendenöffnung B abhängigen Durchmesser sowie die Veränderung der Helligkeit, in der von der Kamera 23 erzeugten Abbildung 39 der Darstellung 19 des virtuellen Hintergrunds 21 nachzubilden und ein natürliches, der theoretischen Abbildung 41 entsprechendes oder angenähertes Bokeh zu erhalten.

Durch das Berechnen von Abbildungsparametern 63, beispielsweise den Durchmessern 77 der Zerstreuungskreise 75, der Schärfentiefe 69 oder dem Winkel 81 zwischen den Strahlen 83 und 85 kann die Berechnungseinrichtung 61 in Abhängigkeit von den empfangenen Objektivdaten 29, beispielsweise der Blendenöffnung B, Einstellanweisungen E für die Steuereinrichtung 25 generieren, um die Abbildungsparameter 63 der Abbildung 39 den Abbildungsparametern 63 der theoretischen Abbildung 41 anzunähern. Dabei kann die Berechnungseinrichtung 61 dazu ausgebildet sein, solche Berechnungen und das Ermitteln von Einstellanweisungen E in Echtzeit durchzuführen, so dass die Darstellung 19 des virtuellen Hintergrunds 21 beispielsweise während einer Aufnahme einer Filmszene mittels der Kamera 23 stets in Abhängigkeit von den empfangenen Objektivdaten 29 bzw. sich verändernden Objektiveinstellungswerten angepasst werden kann, um eine der theoretischen Abbildung 41 möglichst nahe Abbildung 39 mit einem natürlichen und vorgesehenen Bokeh mittels der Kamera 23 erzeugen zu können.

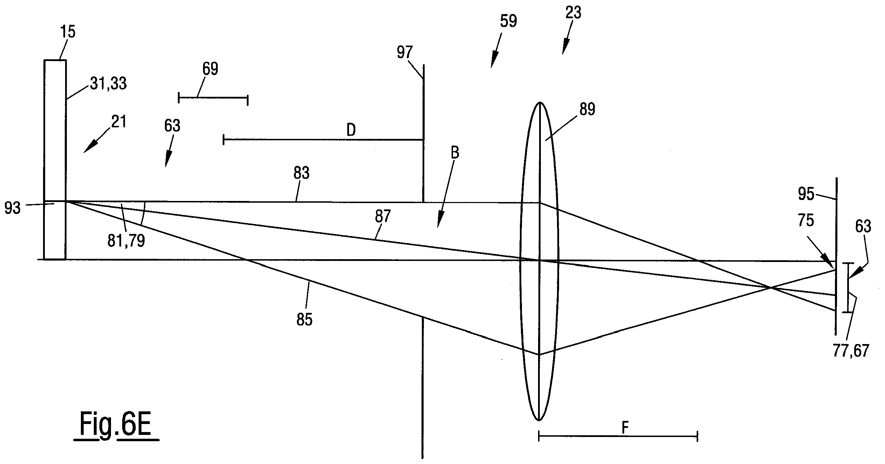

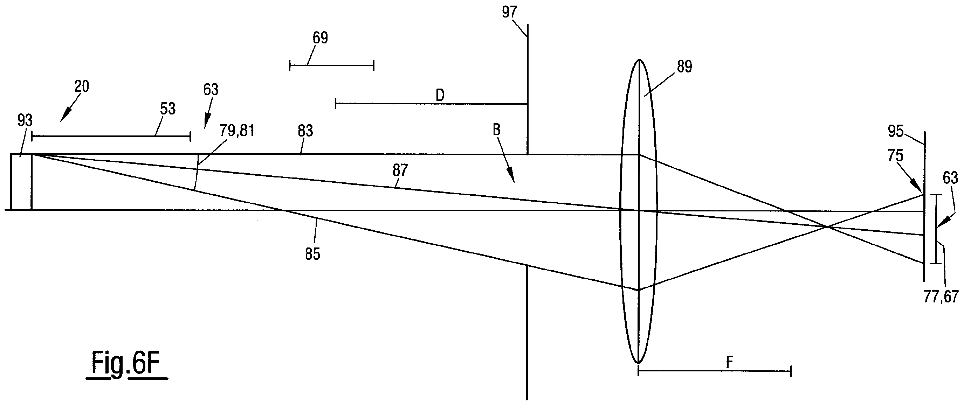

Alternativ oder zusätzlich zu der Blendenöffnung B können die Objektivdaten 29 beispielsweise auch die Fokusentfernung D bzw. die Brennweite F betreffen, welche sich ebenfalls auf die Abbildung 39 bzw. die theoretische Abbildung 41 auswirken können. In den Fig. 6E und 6F entspricht die Blendenöffnung B derjenigen der Fig. 6A und 6B, die Fokusentfernung D ist hingegen durch Verändern der Brennweite F von der Kamera 23 aus betrachtet auf einen Bereich vor der Hintergrund-Wiedergabeeinrichtung 15 eingestellt. Beispielsweise kann eine solche Einstellung dazu vorgesehen sein, ein Gesicht des Schauspielers 17 zu fokussieren (vgl. die Fig. 1 bis 5).

Aufgrund dieser veränderten Fokusentfernung D befindet sich auch die Hintergrund-Wiedergabeeinrichtung 15 in Fig. 6E außerhalb der Schärfentiefe 69, so dass ein Punkt des mittels der Hintergrund-Wiedergabeeinrichtung 15 dargestellten Objekts 93 als ein Zerstreuungskreis 75 auf dem Bildsensor 95 abgebildet wird. Auch hier unterscheidet sich jedoch der Durchmesser 77 des Zerstreuungskreises 75 von demjenigen des Zerstreuungskreises 75 in der theoretischen Abbildung 41 des Punktes des Objekts 93 in dem realen Hintergrunds 20, wie aus dem Vergleich zu Fig. 6 F ersichtlich wird. Auch hier kann somit durch Anpassen der Darstellung 19 des virtuellen Hintergrunds 21 in Abhängigkeit von der empfangenen Brennweite F bzw. Fokusentfernung D eine Annäherung der Abbildung 39 an die theoretische Abbildung 41 erreicht werden. Die Berechnungseinrichtung 61 kann dabei ausgebildet sein, derartige Berechnungen für jeden der Vielzahl von Hintergrundbereichen 47 anzustellen, um eine ständige und umfassende Anpassung der Darstellung 19 des virtuellen Hintergrunds 21 zu ermöglichen.

Zusätzlich zu derartigen, sich auf die Schärfe 73 oder Helligkeit der Abbildung eines Objekts 91, 92, 93 und 94 auswirkenden Einstellungen an dem Objektiv 59 kann auch die Position der Kamera 23 eine Anpassung der Darstellung 19 des virtuellen Hintergrunds 21 erfordern, um eine realistische Abbildung 39 mittels der Kamera 23 zu ermöglichen. Um die Position der Kamera 23 überprüfen zu können, weist das Hintergrundwiedergabesystem 11 eine Positionsbestimmungseinrichtung 57 auf, welche dazu ausgebildet ist, die Kamera betreffende Positionsdaten P an die Steuereinrichtung 25 zu übermitteln (vgl. Fig. 4). Dazu kann die Positionsbestimmungseinrichtung 57 beispielsweise nicht gezeigte Hilfskameras umfassen, welche die Kamera 23 filmen und ein Ermitteln deren Position ermöglichen können.

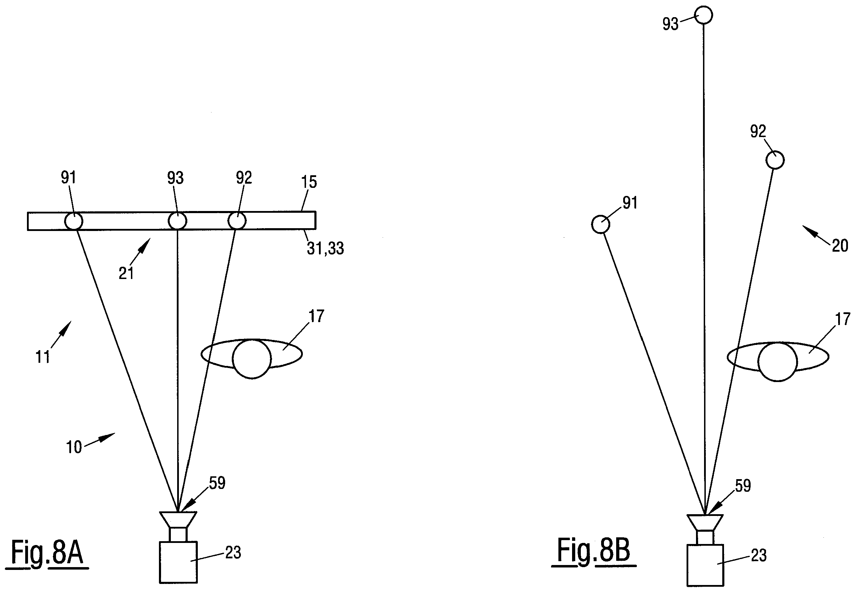

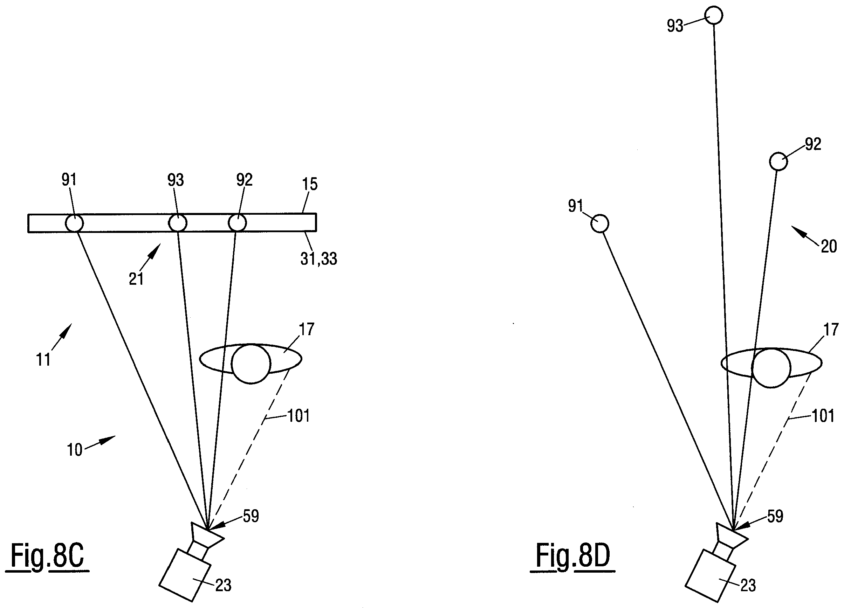

Fig. 8A zeigt die Kamera 23 mit einer mittig auf die Hintergrund-Wiedergabeeinrichtung 15 ausgerichteten optischen Achse 101. Dabei ist die Darstellung 19 des virtuellen Hintergrunds 21 derart erzeugt, dass die Winkel der Objekte 91, 92 und 93 zu der optischen Achse 101 gleich den Winkeln dieser Objekte 91, 92 und 93 in dem virtuellen Hintergrund 21 entsprechenden realen Hintergrund 20 sind (vgl. Fig. 8B). Wird die Kamera 23 hingegen gedreht und beispielsweise auf den Schauspieler 17 ausgerichtet, verändern sich die Winkel der Objekte 91, 92 und 93 zu der optischen Achse 101 der Kamera 23 in der Darstellung 19 des virtuellen Hintergrunds 21 und in dem realen Hintergrund 20 unterschiedlich, wie die Fig. 8C und 8D verdeutlichen.

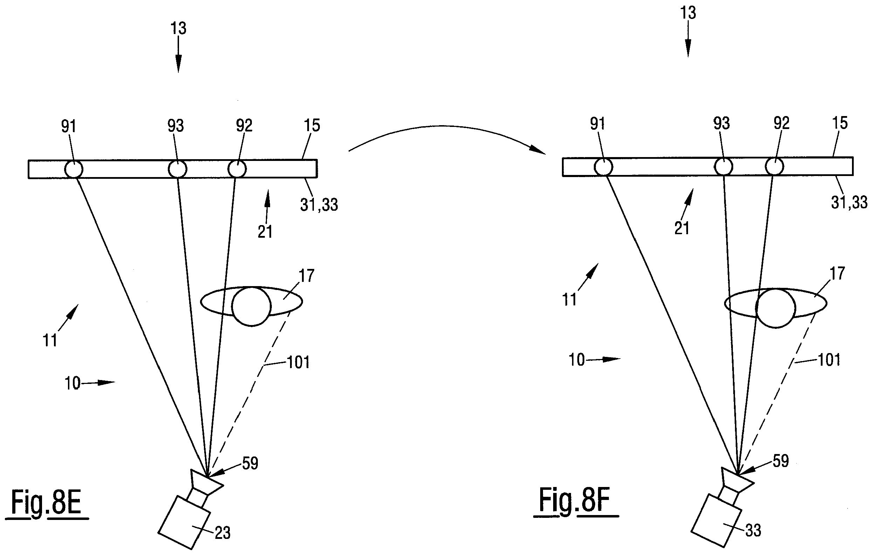

Um auch diesen Effekt korrigieren zu können, kann die Berechnungseinrichtung 61 dazu ausgebildet sein, solche Winkel der Objekte 91, 92 und 93 für den realen Hintergrund 20 anhand eines in dem Speicher 45 gespeicherten Modell des virtuellen Hintergrunds 21 zu berechnen und Einstellanweisungen E für die Steuereinrichtung 25 zu generieren, anhand derer die Darstellung 19 des virtuellen Hintergrunds angepasst werden kann. Die Steuereinrichtung 25 kann dabei dazu ausgebildet sein, die Objekte 91, 92 und 93 an der Hintergrund-Wiedergabeeinrichtung 15 ausgehend von der ursprünglichen Anordnung der Fig. 8A bzw. 8E derart zu verschieben, dass die Anordnung der Objekte 91, 92 und 93 gemäß der Fig. 8F der erwarteten Anordnung bei einer Aufnahme des realen Hintergrunds 20 wie in Fig. 8D entspricht.

Das Anpassen der Darstellung 19 des virtuellen Hintergrunds 21 in Abhängigkeit von empfangenen Objektivdaten 29 ermöglicht es somit, mittels einer derartigen Hintergrund-Wiedergabeeinrichtung 15 realistische bzw. einer theoretischen Abbildung 41 bei einer Aufnahme des realen Hintergrunds 20 entsprechende oder angenäherte Abbildungen 39 zu erzeugen. Insbesondere können eine realistische Textur bzw. ein realistischer Verlauf einer abstandsabhängigen Unschärfe in der Abbildung 39 des virtuellen Hintergrunds 21 und ein dem Bokeh der theoretischen Abbildung 41 entsprechendes bzw. angenähertes Bokeh erreicht werden.

### Bezugszeichenliste

- 10: Aufnahmesystem
- 11: Hintergrundwiedergabesystem
- 13: Bildaufnahmestudio
- 15: Hintergrund-Wiedergabeeinrichtung
- 17: reales Motiv, Schauspieler
- 19: Darstellung
- 20: realer Hintergrund
- 21: virtueller Hintergrund
- 23: Kamera
- 25: Steuereinrichtung
- 27: Dateneingang
- 29: Objektivdaten
- 31: Beleuchtungseinrichtung
- 33: LED-Wand
- 35: Leuchtdiode
- 37: Abbildungseffekt
- 39: Abbildung des virtuellen Hintergrunds
- 41: theoretische Abbildung
- 43: dreidimensionale Szene
- 45: Speicher
- 47: Hintergrundbereich
- 49: Bildinformation
- 51: Positionsinformation
- 53: Abstand
- 54: Abstand
- 57: Positionsbestimmungseinrichtung
- 59: Kameraobjektiv, Wechselobjektiv
- 61: Berechnungseinrichtung
- 63: Abbildungsparameter
- 65: Datenbank
- 67: Maß für eine Unschärfe
- 69: Schärfentiefe
- 70: Schärfebereich
- 71: Schärfebereich
- 72: Schärfebereich
- 73: Schärfe
- 75: Zerstreuungskreis
- 77: Durchmesser
- 79: Maß für eine Helligkeit
- 81: Winkel zwischen äußeren Strahlen
- 83: erster äußerer Strahl
- 85: zweiter äußerer Strahl
- 87: Strahl
- 89: Linse
- 91: erstes Objekt
- 92: zweites Objekt
- 93: drittes Objekt
- 94: viertes Objekt
- 95: Bildsensor
- 97: Blende
- 99: Punkt
- 101: optische Achse

- B: Blendenöffnung
- D: Fokusentfernung
- E: Einstellanweisung
- F: Brennweite
- I: Information
- P: Positionsdaten

## Patentansprüche

1. Hintergrundwiedergabesystem (11) für ein virtuelles Bildaufnahmestudio (13),
mit einer Hintergrund-Wiedergabeeinrichtung (15), welche dazu ausgebildet ist, hinter oder über einem realen Motiv (17) eine Darstellung (19) eines virtuellen Hintergrunds (21) für eine Aufnahme mittels einer zugeordneten Kamera (23) wiederzugeben, und
mit einer Steuereinrichtung (25), welche dazu ausgebildet ist, die Hintergrund-Wiedergabeeinrichtung (15) zu steuern,
wobei die Steuereinrichtung (25) einen Dateneingang (27) zum Empfangen von Objektivdaten (29) der zugeordneten Kamera (23) aufweist,
**dadurch gekennzeichnet, dass**
die Steuereinrichtung (25) dazu ausgebildet ist, die Darstellung (19) des virtuellen Hintergrunds (21) in Abhängigkeit von den empfangenen Objektivdaten (29) derart anzupassen, dass abstandsabhängige Abbildungseffekte (37), die bei Abbilden eines dem virtuellen Hintergrund (21) entsprechenden realen Hintergrunds (20) mittels der zugeordneten Kamera (23) gemäß den empfangenen Objektivdaten (29) entstehen würden, in der von der Kamera (23) erzeugbaren Abbildung (39) der Darstellung (19) des virtuellen Hintergrunds (21) nachgebildet sind, wobei die nachgebildeten abstandsabhängigen Abbildungseffekte (37) eine abstandsabhängige Unschärfe in der von der Kamera (23) erzeugbaren Abbildung (39) umfassen.

2. Hintergrundwiedergabesystem (11) nach Anspruch 1,
wobei die Hintergrund-Wiedergabeeinrichtung (15) eine flächige aktive Beleuchtungseinrichtung (31) aufweist; und/oder
wobei die Hintergrund-Wiedergabeeinrichtung (15) dazu ausgebildet ist, das reale Motiv (17) zu beleuchten; und/oder
wobei die Hintergrund-Wiedergabeeinrichtung (15) eine LED-Wand (33) aufweist, die eine Vielzahl von individuell ansteuerbaren Leuchtdioden (35) in einer flächigen Anordnung aufweist; und/oder wobei die Hintergrund-Wiedergabeeinrichtung (15) sich in einer vertikalen und/oder horizontalen Ausrichtung erstreckt.

3. Hintergrundwiedergabesystem (11) nach einem der vorhergehenden Ansprüche,
wobei die Steuereinrichtung (25) dazu ausgebildet ist, die Darstellung (19) des virtuellen Hintergrunds (21) derart anzupassen, dass sich eine mittels der Kamera (23) bei den empfangenen Objektivdaten (29) erzeugbare Abbildung (39) der Darstellung (19) einer theoretischen Abbildung (41) annähert, die bei Abbilden eines dem virtuellen Hintergrund (21) entsprechenden realen Hintergrunds (20) mittels der zugeordneten Kamera (23) entstehen würde.

4. Hintergrundwiedergabesystem (11) nach einem der vorhergehenden Ansprüche,
wobei die Objektivdaten (29) Parameterwerte repräsentieren, die an einem Objektiv (59) der zugeordneten Kamera (23) eingestellt sind,
wobei die Objektivdaten (29) insbesondere eingestellte Werte wenigstens eines der folgenden Objektivparameter der zugeordneten Kamera (23) repräsentieren: eine Blendenöffnung (B), eine Fokusentfernung (D) und/oder eine Brennweite (F) eines Objektivs (59) der zugeordneten Kamera (23).

5. Hintergrundwiedergabesystem (11) nach einem der vorhergehenden Ansprüche,
wobei die Objektivdaten (29) eine Information (I) über ein verwendetes Objektiv (59) der zugeordneten Kamera (23) umfassen, wobei die Steuereinrichtung (25) dazu ausgebildet ist, die Darstellung (19) des virtuellen Hintergrunds (21) in Abhängigkeit von der empfangenen Information (I) über das verwendete Objektiv (59) anzupassen,
wobei die Information (I) insbesondere einen Objektivtyp, eine Kennzeichnung des Objektivs (59), eine Form einer Blende (97) des Objektivs (59), eine Anordnung zylindrischer Elemente des Objektivs (59) und/oder eine Beschichtung eines optischen Elements des Objektivs (59) repräsentiert.

6. Hintergrundwiedergabesystem (11) nach einem der vorhergehenden Ansprüche,
wobei der virtuelle Hintergrund (21) eine dreidimensionale Szene (43) repräsentiert und die Steuereinrichtung (25) dazu ausgebildet ist, verschiedene Bereiche der dreidimensionalen Szene (43) in Abhängigkeit von den empfangenen Objektivdaten (29) in unterschiedlicher Schärfe (73) darzustellen.

7. Hintergrundwiedergabesystem (11) nach einem der vorhergehenden Ansprüche,
wobei die Steuereinrichtung (25) eine Berechnungseinrichtung (61) aufweist, welche dazu ausgebildet ist, für eine Vielzahl von Hintergrundbereichen (47) Abbildungsparameter (63) einer theoretischen Abbildung (41), die bei Abbilden eines dem virtuellen Hintergrund (21) entsprechenden realen Hintergrunds (20) mittels der zugeordneten Kamera (23) gemäß den empfangenen Objektivdaten (29) entstehen würde, und Abbildungsparameter (63) einer mittels der zugeordneten Kamera (23) bei Verwendung der empfangenen Objektivdaten (29) erzeugbaren Abbildung (39) der Darstellung (19) des virtuellen Hintergrunds (21) zu bestimmen, wobei die Steuereinrichtung (25) dazu ausgebildet ist, die Darstellung (19) des virtuellen Hintergrunds (21) an der Hintergrund-Wiedergabeeinrichtung (15) derart anzupassen, dass sich die Abbildungsparameter (63) der Abbildung (39) den Abbildungsparametern (63) der theoretischen Abbildung (41) annähern.

8. Hintergrundwiedergabesystem (11) nach Anspruch 7,
wobei die Berechnungseinrichtung (61) dazu ausgebildet ist, Einstellanweisungen (E) für die Hintergrund-Wiedergabeeinrichtung (15) anhand der bestimmten Abbildungsparameter (63) der Abbildung (39) und der bestimmten Abbildungsparameter (63) der theoretischen Abbildung (41) zu ermitteln, wobei die Steuereinrichtung (25) dazu ausgebildet ist, die Einstellanweisungen (E) zum Anpassen der Darstellung (19) des virtuellen Hintergrunds (21) auszuführen.

9. Hintergrundwiedergabesystem (11) nach Anspruch 7 oder 8,
wobei die Berechnungseinrichtung (61) dazu ausgebildet ist, die Hintergrundbereiche (47) in jeweilige Schärfebereiche (70, 71, 72) einzuteilen, und wobei die Steuereinrichtung (25) dazu ausgebildet ist, die Hintergrund-Wiedergabeeinrichtung (15) zu einem Darstellen der Hintergrundbereiche (47) mit einer einem jeweiligen Schärfebereich (70, 71, 72) zugeordneten Schärfe (73) anzusteuern; und/oder wobei die Berechnungseinrichtung (61) dazu ausgebildet ist, ein Maß (67) für eine Unschärfe der Hintergrundbereiche (47) in der Abbildung (39) und in der theoretischen Abbildung (41) zu bestimmen, wobei die Berechnungseinrichtung (61) insbesondere dazu ausgebildet ist, das Maß (67) für die Unschärfe der Hintergrundbereiche (47) in Abhängigkeit von Werten einer Blendenöffnung (B) und/oder einer Brennweite (F) und/oder einer Fokusentfernung (D) der Kamera (23) zu bestimmen.

10. Hintergrundwiedergabesystem (11) nach einem der Ansprüche 7 bis 9,
wobei die Berechnungseinrichtung (61) dazu ausgebildet ist, die Abbildungsparameter (63) in Abhängigkeit von einer Information (I) über ein mit der Kamera (23) verbundenes Objektiv (59) zu bestimmen,
wobei die Information (I) insbesondere abstandsabhängige optische Aberrationen des Objektivs (59) umfasst; und/oder
wobei die Berechnungseinrichtung (61) insbesondere dazu ausgebildet ist, auf eine Datenbank (65) mit Rechenvorschriften zum Bestimmen von Einstellanweisungen (E) für die Hintergrund-Wiedergabeeinrichtung (15) zuzugreifen und die Einstellanweisungen (E) anhand der Rechenvorschriften in Abhängigkeit von der Information (I) zu bestimmen.

11. Aufnahmesystem (10) mit einem Hintergrundwiedergabesystem (11) nach einem der vorhergehenden Ansprüche und mit einer Kamera (23), welche ein Kameraobjektiv (23) aufweist und dazu ausgebildet ist, Objektivdaten (29) des Kameraobjektivs (23) an den Dateneingang (27) der Steuereinrichtung (25) zu übermitteln,
wobei das Aufnahmesystem (10) insbesondere eine Positionsbestimmungseinrichtung (57) aufweist, die dazu ausgebildet ist, eine Position der Kamera (23) relativ zu der Hintergrund-Wiedergabeeinrichtung (15) zu bestimmen und entsprechende Positionsdaten (P) an den Dateneingang (27) der Steuereinrichtung (25) zu übermitteln.

12. Verfahren zum Steuern einer Hintergrund-Wiedergabeeinrichtung (15), welche dazu ausgebildet ist, hinter oder über einem realen Motiv (17) eine Darstellung (19) eines virtuellen Hintergrunds (21) für eine Aufnahme mittels einer zugeordneten Kamera (23) wiederzugeben, mit den Schritten:
- Empfangen von Objektivdaten (29) der zugeordneten Kamera (23); und
- Anpassen der Darstellung (19) des virtuellen Hintergrunds (21) in Abhängigkeit von den empfangenen Objektivdaten (29),
**dadurch gekennzeichnet, dass**
die Darstellung (19) derart angepasst wird, dass abstandsabhängige Abbildungseffekte (37), die bei Abbilden eines dem virtuellen Hintergrund (21) entsprechenden realen Hintergrunds (20) mittels der zugeordneten Kamera (23) gemäß den empfangenen Objektivdaten (29) entstehen würden, in einer von der Kamera (23) erzeugbaren Abbildung (39) der Darstellung (19) des virtuellen Hintergrunds (21) nachgebildet werden, wobei die nachgebildeten abstandsabhängigen Abbildungseffekte (37) eine abstandsabhängige Unschärfe in der von der Kamera (23) erzeugbaren Abbildung (39) umfassen.

13. Verfahren nach Anspruch 12,
wobei die Objektivdaten (29) eingestellte Werte wenigstens eines der folgenden Objektivparameter repräsentieren: eine Blendenöffnung (B), eine Fokusentfernung (D) und/oder eine Brennweite (F).

14. Verfahren nach Anspruch 12 oder 13,
ferner mit den Schritten:
- Aufnehmen eines realen Motivs (17) vor der Hintergrund-Wiedergabeeinrichtung (15) mittels der zugeordneten Kamera (23);
- Erfassen von Objektivdaten (29) eines Kameraobjektivs (59) der zugeordneten Kamera (23); und
- Übermitteln der Objektivdaten (29) an die Hintergrund-Wiedergabeeinrichtung (15) oder an eine der Hintergrund-Wiedergabeeinrichtung (15) zugeordnete Steuereinrichtung (25).

15. Verfahren nach einem der Ansprüche 12 bis 14,
wobei der virtuelle Hintergrund (21) eine dreidimensionale Szene (43) repräsentiert und wobei verschiedene Bereiche der dreidimensionalen Szene (43) in Abhängigkeit von den empfangenen Objektivdaten (29) in unterschiedlicher Schärfe (73) dargestellt werden; und/oder
wobei die Darstellung (19) des virtuellen Hintergrunds (21) derart angepasst wird, dass eine mittels der zugeordneten Kamera (23) bei den übermittelten Objektivdaten (29) erzeugbare Abbildung (39) der Darstellung (19) des virtuellen Hintergrunds (21) einer theoretischen Abbildung (41) angenähert wird, die bei Abbilden eines dem virtuellen Hintergrund (21) entsprechenden realen Hintergrunds (20) mittels der zugeordneten Kamera (23) entstehen würde.

## Claims

1. A background display system (11) for a virtual image recording studio (13) having
a background display device (15) which is configured to display a representation (19) of a virtual background (21) behind or above a real subject (17) for a recording by means of an associated camera (23), and
a control device (25) which is configured to control the background display device (15),
wherein the control device (25) comprises a data input (27) for receiving lens data (29) of the associated camera (23),
**characterized in that**
the control device (25) is configured to adjust the representation (19) of the virtual background (21) in dependence on the received lens data (29) such that distance-dependent imaging effects (37) which would arise if a real background (20) corresponding to the virtual background (21) was imaged by means of the associated camera (23) in accordance with the received lens data (29) are reproduced in the optical image (39) of the representation (19) of the virtual background (21) which can be generated by the camera (23), with the reproduced distance-dependent imaging effects (37) comprising a distance-dependent blur in the optical image (39) which can be generated by the camera (23).

2. A background display system (11) according to claim 1,
wherein the background display device (15) comprises a two-dimensionally extending active illumination apparatus (31); and/or
wherein the background display device (15) is configured to illuminate the real subject (17); and/or
wherein the background display device (15) comprises an LED wall (33) comprising a plurality of individually controllable light-emitting diodes (35) in a two-dimensional arrangement; and/or
wherein the background display device (15) extends in a vertical and/or horizontal direction.

3. A background display system (11) according to one of the preceding claims, wherein the control device (25) is configured to adjust the representation (19) of the virtual background (21) such that an optical image (39) of the representation (19) which can be generated by means of the camera (23) in accordance with the received lens data (29) approximates a theoretical image (41) which would be generated if a real background (20) corresponding to the virtual background (21) was imaged by means of the associated camera (23).

4. A background display system (11) according to any one of the preceding claims,
wherein the lens data (29) represent parameter values set for a lens (59) of the associated camera (23),
wherein the lens data (29) in particular represent set values of at least one of the following lens parameters of the associated camera (23): a diaphragm aperture (B), a focusing distance (D) and/or a focal length (F) of a lens (59) of the associated camera (23).

5. A background display system (11) according to any one of the preceding claims,
wherein the lens data (29) comprise information (I) about a lens (59) used in the associated camera (23), wherein the control device (25) is configured to adjust the representation (19) of the virtual background (21) in dependence on the received information (I) about the lens (59) used, wherein the information (I) in particular represents a lens type, an identification of the lens (59), a shape of a diaphragm (97) of the lens (59), an arrangement of cylindrical elements of the lens (59) and/or a coating of an optical element of the lens (59).

6. A background display system (11) according to any one of the preceding claims,
wherein the virtual background (21) represents a three-dimensional scene (43) and wherein the control device (25) is configured to represent different regions of the three-dimensional scene (43) with different sharpness (73) depending on the received lens data (29).

7. A background display system (11) according to any one of the preceding claims,
wherein the control device (25) comprises a calculation device (61) which is configured to determine, for a plurality of background regions (47), imaging parameters (63) of a theoretical image (41) which would be generated if a real background (20) corresponding to the virtual background (21) was imaged by means of the associated camera (23) in accordance with the received lens data (29), and imaging parameters (63) of an optical image (39) of the representation (19) of the virtual background (21) which can be generated by means of the associated camera (23) in accordance with the received lens data (29), wherein the control device (25) is configured to adjust the representation (19) of the virtual background (21) on the background display device (15) such that the imaging parameters (63) of the optical image (39) approximate the imaging parameters (63) of the theoretical image (41).

8. A background display system (11) according to claim 7,
wherein the calculation device (61) is configured to determine setting instructions (E) for the background display device (15) based on the determined imaging parameter (63) of the optical image (39) and the determined imaging parameter (63) of the theoretical image (41), wherein the control device (25) is configured to carry out the setting instructions (E) for adjusting the representation (19) of the virtual background (21).

9. A background display system (11) according to claim 7 or 8,
wherein the calculation device (61) is configured to divide the background regions (47) into respective sharpness regions (70, 71, 72), and wherein the control device (25) is configured to control the background display device (15) to represent the background regions (47) with a sharpness (73) assigned to a respective sharpness region (70, 71, 72); and/or
wherein the calculation device (61) is configured to determine a measure (67) for a blurring of the background regions (47) in the optical image (39) and in the theoretical image (41),
wherein the calculation device (61) is in particular configured to determine the measure (67) for the blurring of the background regions (47) in dependence on values of a diaphragm aperture (B) and/or a focal length (F) and/or a focusing distance (D) of the camera (23).

10. A background display system (11) according any one of the claims 7 to 9,
wherein the calculation device (61) is configured to determine the imaging parameters (63) in dependence on information (I) about a lens (59) connected to the camera (23),
wherein the information (I) in particular comprises distance-dependent optical aberrations of the lens (59); and/or
wherein the calculation device (61) is in particular configured to access a database (65) with computational instructions for determining setting instructions (E) for the background display device (15), and to determine the setting instructions (E) in dependence on the information (I) based on the computational instructions.

11. A recording system (10) having a background display system (11) according to any one of the preceding claims and having a camera (23) which comprises a camera lens (59) and which is configured to transmit lens data (29) of the camera lens (59) to the data input (27) of the control device (25),
wherein the recording system (10) in particular comprises a position determining device (57) which is configured to determine a position of the camera (23) relative to the background display device (15) and to transmit corresponding position data (P) to the data input (27) of the control device (25).

12. A method for controlling a background display device (15) which is configured to display a representation (19) of a virtual background (21) behind or above a real subject (17) for a recording by means of an associated camera (23), including the steps:
- receiving lens data (29) of the associated camera (23); and
- adjusting the representation (19) of the virtual background (21) in dependence on the received lens data (29),
**characterized in that**
the representation (19) is adjusted such that distance-dependent imaging effects (37) which would arise if a real background (20) corresponding to the virtual background (21) was imaged by means of the associated camera (23) in accordance with the received lens data (29) are reproduced in an optical image (39) of the representation (19) of the virtual background (21) which can be generated by the camera (23), with the reproduced distance-dependent imaging effects (37) comprising a distance-dependent blur in the optical image (39) which can be generated by the camera (23).

13. A method according to claim 12,
wherein the lens data (29) represent set values of at least one of the following lens parameters: a diaphragm aperture (B), a focusing distance (D) and/or a focal length (F).

14. A method according to claim 12 or 13,
having the additional steps:
- recording a real subject (17) in front of the background display device (15) by means of the associated camera (23);
- acquiring lens data (29) of a camera lens (59) of the associated camera (23); and
- transmitting the lens data (29) to the background display device (15) or to a control device (25) assigned to the background display device (15).

15. A method according to any one of the claims 12 to 14,
wherein the virtual background (21) represents a three-dimensional scene (43) and wherein different regions of the three-dimensional scene (43) are represented with different sharpness (73) depending on the received lens data (29); and/or
wherein the representation (19) of the virtual background (21) is adjusted such that an optical image (39) of the representation (19) of the virtual background (21) which can be generated by means of the associated camera (23) in accordance with the transmitted lens data (29) approximates a theoretical image (41) which would be generated if a real background (20) corresponding to the virtual background (21) was imaged by means of the associated camera (23).

## Revendications

1. Système de reproduction d'arrière-plan (11) pour un studio de prise de vues virtuel (13),
comprenant un dispositif de reproduction d'arrière-plan (15) conçu pour reproduire, derrière ou au-dessus d'un sujet réel (17), une représentation (19) d'un arrière-plan virtuel (21) pour une prise de vue au moyen d'une caméra associée (23), et
comprenant un dispositif de commande (25) conçu pour commander le dispositif de reproduction d'arrière-plan (15),
le dispositif de commande (25) présentant une entrée de données (27) pour la réception de données d'objectif (29) de la caméra associée (23), **caractérisé en ce que**
le dispositif de commande (25) est conçu pour adapter la représentation (19) de l'arrière-plan virtuel (21) en fonction des données d'objectif (29) reçues, de telle sorte que des effets d'illustration (37) dépendant de la distance, qui seraient obtenus si un arrière-plan réel (20), correspondant à l'arrière-plan virtuel (21), était illustré au moyen de la caméra associée (23) conformément aux données d'objectif (29) reçues, soient imités dans l'illustration (39) de la représentation (19) de l'arrière-plan virtuel (21), susceptible d'être produite par la caméra (23), sachant que les effets d'illustration (37) imités, dépendant de la distance, présentent un flou, dépendant de la distance, dans l'illustration (39) susceptible d'être produite par la caméra (23).

2. Système de reproduction d'arrière-plan (11) selon la revendication 1,
dans lequel le dispositif de reproduction d'arrière-plan (15) comprend un dispositif d'éclairage actif (31) surfacique ; et/ou
le dispositif de reproduction d'arrière-plan (15) est conçu pour éclairer le sujet réel (17) ; et/ou
le dispositif de reproduction d'arrière-plan (15) comprend une paroi à DEL (33) qui comprend une pluralité de diodes lumineuses (35), susceptibles d'être commandées individuellement, en une disposition surfacique ; et/ou le dispositif de reproduction d'arrière-plan (15) s'étend selon une orientation verticale et/ou horizontale.

3. Système de reproduction d'arrière-plan (11) selon l'une des revendications précédentes,
dans lequel le dispositif de commande (25) est conçu pour adapter la représentation (19) de l'arrière-plan virtuel (21) de telle sorte qu'une illustration (39) de la représentation (19), susceptible d'être produite au moyen de la caméra (23) avec les données d'objectif (29) reçues, se rapproche d'une illustration théorique (41) qui serait obtenue si un arrière-plan réel (20) correspondant à l'arrière-plan virtuel (21) était illustré au moyen de la caméra associée (23).

4. Système de reproduction d'arrière-plan (11) selon l'une des revendications précédentes,
dans lequel les données d'objectif (29) correspondent à des valeurs de paramètres qui sont réglées sur un objectif (59) de la caméra associée (23), les données d'objectif (29) correspondent en particulier à des valeurs réglées d'au moins l'un des paramètres d'objectif suivants de la caméra associée (23) : une ouverture de diaphragme (B), une distance de mise au point (D) et/ou une distance focale (F) d'un objectif (59) de la caméra associée (23).

5. Système de reproduction d'arrière-plan (11) selon l'une des revendications précédentes,
dans lequel les données d'objectif (29) comprennent une information (I) sur un objectif (59) utilisé de la caméra associée (23),
le dispositif de commande (25) est conçu pour adapter la représentation (19) de l'arrière-plan virtuel (21) en fonction de l'information (I) reçue sur l'objectif (59) utilisé,
l'information (I) correspond en particulier à un type d'objectif, à une identification de l'objectif (59), à une forme d'un diaphragme (97) de l'objectif (59), à une disposition d'éléments cylindriques de l'objectif (59) et/ou à un revêtement d'un élément optique de l'objectif (59).

6. Système de reproduction d'arrière-plan (11) selon l'une des revendications précédentes,
dans lequel l'arrière-plan virtuel (21) correspond à une scène tridimensionnelle (43), et le dispositif de commande (25) est conçu pour représenter, en fonction des données d'objectif (29) reçues, différentes zones de la scène tridimensionnelle (43) avec une netteté (73) différente.

7. Système de reproduction d'arrière-plan (11) selon l'une des revendications précédentes,
dans lequel le dispositif de commande (25) comprend un dispositif de calcul (61) conçu pour définir, pour une pluralité de zones d'arrière-plan (47), des paramètres d'illustration (63) d'une illustration théorique (41) qui serait obtenue si un arrière-plan réel (20) correspondant à l'arrière-plan virtuel (21) était illustré au moyen de la caméra associée (23) conformément aux données d'objectif reçues (29), et pour définir des paramètres d'illustration (63) d'une illustration (39) de la représentation (19) de l'arrière-plan virtuel (21), laquelle est susceptible d'être produite au moyen de la caméra associée (23) en utilisant les données d'objectif reçues (29),
le dispositif de commande (25) est conçu pour adapter la représentation (19) de l'arrière-plan virtuel (21) sur le dispositif de reproduction d'arrière-plan (15) de telle sorte que les paramètres d'illustration (63) de l'illustration (39) se rapprochent des paramètres d'illustration (63) de l'illustration théorique (41).

8. Système de reproduction d'arrière-plan (11) selon la revendication 7,
dans lequel le dispositif de calcul (61) est adapté pour déterminer des instructions de réglage (E) pour le dispositif de reproduction d'arrière-plan (15) en se basant sur les paramètres d'illustration définis (63) de l'illustration (39) et sur les paramètres d'illustration définis (63) de l'illustration théorique (41),
le dispositif de commande (25) est conçu pour exécuter les instructions de réglage (E) pour adapter la représentation (19) de l'arrière-plan virtuel (21).

9. Système de reproduction d'arrière-plan (11) selon la revendication 7 ou 8, dans lequel le dispositif de calcul (61) est conçu pour diviser les zones d'arrière-plan (47) en zones de netteté respectives (70, 71, 72), et
le dispositif de commande (25) est conçu pour commander le dispositif de reproduction d'arrière-plan (15) de manière à représenter les zones d'arrière-plan (47) avec une netteté (73) associée à une zone de netteté respective (70, 71, 72) ; et/ou
le dispositif de calcul (61) est conçu pour définir l'ampleur (67) d'un flou des zones d'arrière-plan (47) dans l'illustration (39) et dans l'illustration théorique (41),
le dispositif de calcul (61) est en particulier conçu pour définir l'ampleur (67) du flou des zones d'arrière-plan (47) en fonction des valeurs d'une ouverture de diaphragme (B) et/ou d'une distance focale (F) et/ou d'une distance de mise au point (D) de la caméra (23).

10. Système de reproduction d'arrière-plan (11) selon l'une des revendications 7 à 9,
dans lequel le dispositif de calcul (61) est conçu pour définir les paramètres d'illustration (63) en fonction d'une information (I) sur un objectif (59) relié à la caméra (23),
l'information (I) comprend en particulier des aberrations optiques de l'objectif (59) qui dépendent de la distance ; et/ou
le dispositif de calcul (61) est en particulier conçu pour accéder à une base de données (65), contenant des règles de calcul destinées à définir des instructions de réglage (E) pour le dispositif de reproduction d'arrière-plan (15), et pour définir les instructions de réglage (E) en fonction de l'information (I) en se basant sur les règles de calcul.

11. Système d'enregistrement (10) comprenant un système de reproduction d'arrière-plan (11) selon l'une des revendications précédentes et une caméra (23) qui comprend un objectif de caméra (23) et qui est conçue pour transmettre des données d'objectif (29) de l'objectif de caméra (23) à l'entrée de données (27) du dispositif de commande (25),
le système d'enregistrement (10) comprenant en particulier un dispositif de détermination de position (57) qui est conçu pour déterminer une position de la caméra (23) par rapport au dispositif de reproduction d'arrière-plan (15) et pour transmettre des données de position (P) correspondantes à l'entrée de données (27) du dispositif de commande (25).

12. Procédé de commande d'un dispositif de reproduction d'arrière-plan (15) pour reproduire, derrière ou au-dessus d'un sujet réel (17), une représentation (19) d'un arrière-plan virtuel (21) pour une prise de vue au moyen d'une caméra associée (23), comprenant les étapes consistant à :
- recevoir des données d'objectif (29) de la caméra associée (23) ; et
- adapter la représentation (19) de l'arrière-plan virtuel (21) en fonction des données d'objectif (29) reçues,
**caractérisé en ce que**
la représentation (19) est adaptée de telle sorte que des effets d'illustration (37) dépendant de la distance, qui seraient obtenus si un arrière-plan réel (20), correspondant à l'arrière-plan virtuel (21), était illustré au moyen de la caméra associée (23) conformément aux données d'objectif (29) reçues, soient imités dans une illustration (39) de la représentation (19) de l'arrière-plan virtuel (21), susceptible d'être produite par la caméra (23), sachant que les effets d'illustration (37) imités, dépendant de la distance, présentent un flou, dépendant de la distance, dans l'illustration (39) susceptible d'être produite par la caméra (23).

13. Procédé selon la revendication 12,
dans lequel les données d'objectif (29) correspondent à des valeurs réglées de l'un au moins des paramètres d'objectif suivants : une ouverture de diaphragme (B), une distance de mise au point (D) et/ou une distance focale (F).

14. Procédé selon la revendication 12 ou 13,
comprenant en outre les étapes consistant à :
- prendre un sujet réel (17) devant le dispositif de reproduction d'arrière-plan (15) au moyen de la caméra associée (23) ;
- acquérir des données d'objectif (29) d'un objectif de caméra (59) de la caméra associée (23) ; et
- transmettre les données d'objectif (29) au dispositif de reproduction d'arrière-plan (15) ou à un dispositif de commande (25) associé au dispositif de reproduction d'arrière-plan (15).

15. Procédé selon l'une des revendications 12 à 14,
dans lequel l'arrière-plan virtuel (21) correspond à une scène tridimensionnelle (43), et, en fonction des données d'objectif (29) reçues, différentes zones de la scène tridimensionnelle (43) sont représentées avec une netteté (73) différente; et/ou
la représentation (19) de l'arrière-plan virtuel (21) est adaptée de telle sorte qu'une illustration (39) de la représentation (19) de l'arrière-plan virtuel (21), susceptible d'être produite au moyen de la caméra associée (23) avec les données d'objectif (29) transmises, se rapproche d'une illustration théorique (41) qui serait obtenue si un arrière-plan réel (20), correspondant à l'arrière-plan virtuel (21), était illustré au moyen de la caméra associée (23).
